# EUROPEAN PATENT SPECIFICATION

(11) **EP 4 291 921 B1**
(45) Date of publication and mention of the grant of the patent: **30.09.2026**
(21) Application number: 22708811.9
(22) Date of filing: 10.02.2022
(51) Int. Cl.: G01S 17/894, G01S 7/4913, G01S 7/4863

(54) **ELECTRONIC DEVICE, METHOD AND COMPUTER PROGRAM**
ELEKTRONISCHE VORRICHTUNG, VERFAHREN UND COMPUTERPROGRAMM
DISPOSITIF ÉLECTRONIQUE, PROCÉDÉ ET PROGRAMME INFORMATIQUE

(30) Priority: 15.02.2021 EP 21157114
(43) Date of publication of application: 20.12.2023
(73) Proprietor: Sony Semiconductor Solutions Corporation, Atsugi-shi, Kanagawa 243-0014 (JP); Sony Depthsensing Solutions SA/NV, 1160 Auderghem (Brussels) (BE)
(72) Inventor: GIMENO, Cecilia, 70327 Stuttgart (DE); DING, Qing, 70327 Stuttgart (DE)
(74) Representative: MFG Patentanwälte Meyer-Wildhagen Meggle-Freund Gerhard PartG mbB
(86) International application number: PCT/EP2022/053210
(87) International publication number: WO 2022/171725

(56) References cited:
- DE-A1- 102018 110 583
- US-A1- 2020 018 833

## Description

### TECHNICAL FIELD

The present disclosure generally pertains to the field of electronic devices, in particular imaging devices and methods for imaging devices.

### TECHNICAL BACKGROUND

A time-of-flight camera is a range imaging camera system that determines the distance of objects measuring the time-of-flight (ToF) of a light signal between the camera and the object for each point of the image. A time-of-flight camera thus receives a depth map of a scene. Generally, a time-of-flight camera has an illumination unit that illuminates a region of interest with modulated light, and a pixel array that collects light reflected from the same region of interest. As individual pixels collect light from certain parts of the scene, a time-of-flight camera may include a lens for imaging while maintaining a reasonable light collection area.

A typical ToF camera pixel develops a charge that represents a correlation between the illuminated light and the backscattered light. To enable the correlation between the illuminated light and the backscattered light, each pixel is controlled by a common modulation input coming from one or more Mix drivers. The modulation input to the pixels is synchronous with an illumination block modulation. The number of pixels for ToF image camera is considerably increasing and it is expected to further increase in the future. However, the load that this area supposes to the Mix drivers is an important issue because rising and falling time of the mixing signal considerably increase. At the unit pixels which are located far to the Mix driver, the rising and falling time of the mixing signal are mostly proportional to R × C constant where C is the load capacitance of the unit pixels and R is the routing resistance. At the unit pixels which are located near to the Mix driver, module and bonding wire inductance also influence the rising and falling time of the mixing signal. Longer rising and falling times may significantly affect the quality of the depth image, for example, the Pixel depth non-uniformity may be also dependent on the rising and falling times. Another issue coming from the higher pixel size is the increase in the peak current consumed by the Mix drivers because of the increase of the charging/discharging current required by the pixel. This significantly affects the depth image quality via cyclic error, calibration difficulty, etc. For a fix pixel array format, one can reduce the rising and falling times by increasing the size of the output driver stage or by increasing the voltage supply values. The stronger driver will, however, cost area and diminishing returns due to its own capacitance. Increasing the voltage supply will also cost space and reliability. In addition, both methods require an increase in power consumption. Because, when the size of the output driver stage is increased, a higher current is required by a stronger driver and a higher load on the previous stages, and in the case when voltage supply values are supplied, an increase of the voltage supply is required.

ToF camera pixels are known, for example, from patent application US 2020/018833 A1, which describes an electronic device comprising circuitry configured to drive a unit pixel for a time of flight camera according to a multi-level mixing clock scheme.

Furthermore, patent application DE 10 2018 110583 A1 describes a control circuit for pulsed control of a light-emitting means, in particular an LED or a laser diode with a first switch arranged in a primary circuit and a storage capacitor and a second switch in parallel with the storage capacitor and a control unit to operate the first switch in order to induce at least one charge pulse for charging the storage capacitor and to operate the second switch in order to discharge the storage capacitor while generating a light pulse via the light-emitting means.

Circuit techniques and architectures such as equalizer topologies, two-sides drivers, etc have been evaluated to solve the above-mentioned problem. However, they suppose a significant increase in power consumption with no big improvement in rising and falling times at far end or have worse power/area-performance trade-offs.

In view of these disadvantages, in the present disclosure, Mix driver circuits are proposed to improve rising and falling times.

### SUMMARY

According to a first aspect, the present invention provides an electronic device according to independent claim 1. According to a second aspect, the present invention provides a method according to independent claim 15. Further aspects of the present invention are set forth in the dependent claims, the drawings and the following description.

According to a first aspect, the disclosure provides electronic device comprising circuitry, the circuitry comprising a mix driver for providing a modulation signal to pixels of a time of flight pixel chip, and at least one Save and Share current circuitry connected to the mix driver, wherein the Save and Share circuitry is configured to save charge provided by a power supply and to share the saved charge to the pixels of the time of flight pixel chip.

According to a second aspect, the disclosure provides a method comprising: providing a modulation signal to pixels of a time of flight pixel chip; and saving charge provided by a power supply, by at least one Save and Share current circuitry connected to a mix driver; and sharing the saved charge to the pixels of the time of flight pixel chip, by the Save and Share current circuitry.

Further aspects are set forth in the dependent claims, the following description and the drawings.

### BRIEF DESCRIPTION OF THE DRAWINGS

Embodiments are explained by way of example with respect to the accompanying drawings, in which:
Fig. 1 illustrates schematically the basic operational principle of an indirect time-of-flight (iToF);
Fig. 2 shows, as an example, a conventional Mix driver circuit (MV) with modulation signals at different points of its last stages;
Fig. 3 shows, a first embodiment of a circuitry of a Mix driver circuit (MV) of a Time of Flight (ToF) image sensor with Save and Share current (S&SIC) circuits;
Fig. 4 shows, as an example, a second embodiment of a circuitry of a Mix driver circuit (MV) of a Time of Flight (ToF) image sensor with Save and Share current (S&SIC) circuits;
Fig. 5 shows, a third embodiment of a circuitry of a Mix driver circuit (MV) of a Time of Flight (ToF) image sensor with S&SIC circuits and an additional control circuit;
Fig. 6 shows, as an example, a timing diagram of the control signals of the circuitry of a Mix driver circuit (MV) with S&SIC circuits and an additional control circuit;
Fig. 7 shows, a fourth embodiment of a circuitry of a Mix driver circuit (MV) of a Time of Flight (ToF) image sensor with S&SIC circuits, an additional control circuit and a shared transistor;
Fig. 8 shows, as an example, a timing diagram of the control signals of the circuitry of a Mix driver circuit (MV) with S&SIC circuits, an additional control circuit and a shared transistor;
Fig. 9 shows, a fifth embodiment of a circuitry of a Mix driver circuit (MV) of a Time of Flight (ToF) image sensor with S&SIC circuits, an additional control circuit and additional power supplies;
Fig. 10 shows, as an example, a timing diagram of the control signals of the circuitry of a Mix driver circuit (MV) with S&SIC circuits, an additional control circuit and additional power supplies;
Fig. 11 shows, a sixth embodiment of a circuitry of a Mix driver circuit (MV) of a Time of Flight (ToF) image sensor with S&SIC circuits, an additional control circuit, additional power supplies and a shared transistor;
Fig. 12 shows, as an example, a timing diagram of the control signals of the circuitry of a Mix driver circuit (MV) with S&SIC circuits, an additional control circuit, additional power supplies and a shared transistor.

### DETAILED DESCRIPTION OF EMBODIMENTS

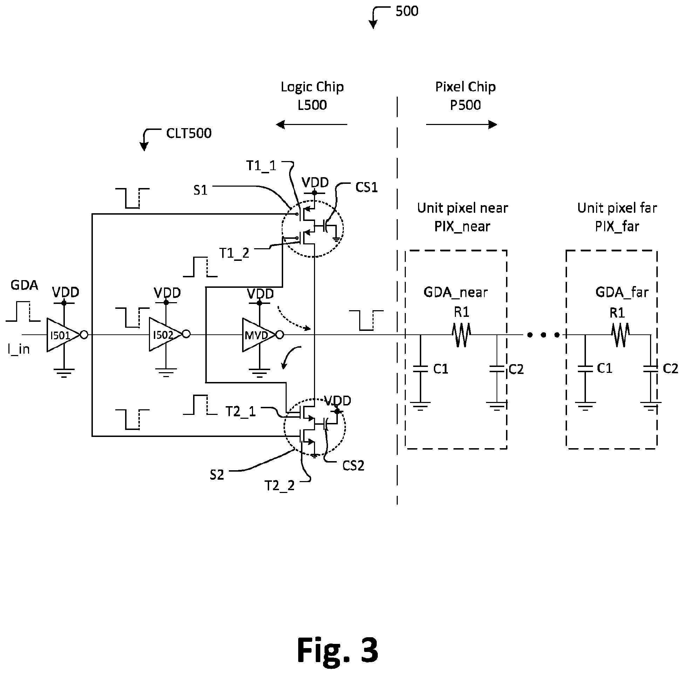

Before a detailed description of a first embodiment of the present disclosure under the reference of Fig. 3 is given, some general explanations are made.

As mentioned in the outset, time-of-flight (ToF) cameras are known to include a variety of methods that measure the time that light needs for travelling a distance in a medium, such that the distance can be determined. In indirect time-of-flight (iToF) cameras calculate a phase shift between illuminated light and backscattered light for obtaining depth measurements by sampling a correlation wave, e.g. between a modulation signal for driving a light source, pixel arrays, or the like, with a signal obtained based on backscattered light.

The embodiments described below provide an electronic device comprising circuitry, the circuitry comprising a mix driver for providing a modulation signal to pixels of a time of flight pixel chip, and at least one Save and Share current circuitry connected to the mix driver, wherein the Save and Share circuitry is configured to save charge provided by a power supply and to share the saved charge to the pixels of the time of flight pixel chip.

The electronic device may for example be an image sensor, e.g. an image sensor of an indirect time of flight camera (iToF). An indirect time of flight camera may resolve distance by measuring a phase shift of an emitted light and a back scattered light.

The circuitry may include any electronic elements, semiconductor elements, switches, amplifiers, transistors, processing elements, and the like.

The pixel chip may comprise several ToF unit pixels. The circuitry may, in particular, be a driver for ToF unit pixels which provides a modulated signal to the signal inputs of one or more unit pixels. Driving a unit pixel of a time of flight camera with mixing clock signals may, for example, comprise using the mixing clock signals as modulation signals for the unit pixel. A modulation signal may be a signal which is correlated to the signal collected in the unit pixel. The modulation signal may be a periodic signal, wherein a period comprises a charging phase and a discharging phase.

A time-of-flight sensor may be a part of a range imaging camera system that determines the distance of objects measuring the time-of-flight (ToF) of a light signal between the sensor and the object for each point of the image.

The pixel chip of a ToF camera typically comprises one or more photosensitive elements (e.g. photodiodes). A photosensitive element converts the incoming light into a current. Switches (e.g. transfer gates) that are connected to the photodiode may direct the current to one or more memory elements (e.g. capacitors) that act as accumulation elements that accumulate and/or store charge. The unit pixels of the pixel chip may be lock-in pixels, e.g. a FDGS type pixels or Photonic Mixer Devices (PMD), for the time of flight camera. All unit pixels in the ToF sensor may be controlled by the modulation signal which is based on the mixing clock signal.

This circuitry may be configured to improve the Mix driver circuit of ToF sensors which drives the pixel array. Specifically, the circuitry may be configured to improve the rise-fall-times and slopes of the waveforms and to optimize the peak/average currents. These improvements reduce the ToF sensors power consumption and/or improve pixel performance.

The circuitry may increase performance or reduce the rise/fall time values of mixing clock signals (modulation signals) by saving some charge in Save and Share current capacitors before it is not needed and sharing it to the pixel chip when it is needed.

The mix driver may be a complementary CMOS driver or any kind of driver, switch or other devices.

According to the embodiments, the at least one Save and Share current circuitry is configured to save charge provided by a power supply in a first phase of a charging phase, and to share the saved charge to the pixel chip in a second phase of the charging phase.

According to the embodiments, the at least one Save and Share current circuitry is configured to save charge provided by a power supply in a first phase of a discharging phase, and to share the saved charge to the pixel chip in a second phase of the discharging phase.

According to the embodiments, the at least one Save and Share current circuitry comprises a first Save and Share circuitry and a second Save and Share circuitry, wherein, the first Save and Share circuitry is configured to save charge provided by a power supply in a first phase of a charging phase, and to share the saved charge to the pixel chip in a second phase of the charging phase of the pixel , and wherein the second Save and Share circuitry is configured to save charge provided by a power supply in a first phase of a discharging phase, and to share the saved charge to the pixel chip in a second phase of the discharging phase.

According to the embodiments, the Save and Share current circuitry comprises the first p-type MOSFET, the second p-type MOSFET and the save and share current storing device, wherein in the first phase of the charging phase, the first p-type MOSFET is turned on and the second p-type MOSFET is turned off, and in the second phase of the charging phase, the first p-type MOSFET is turned off and the second p-type MOSFET is turned on. Alternatively, the first p-type MOSFET and the second p-type MOSFET is replaced with by n-type MOSFET to improve slew rate.

According to the invention, the save and share current storing device is a capacitor or a MOSFET device acting as a capacitor. A MOSFET comprises a source, a drain and a gate. The control of the current flow in the semiconductor area between the two electrical terminals drain and source is done via a control voltage (gate-source voltage) or control potential (gate potential) at the gate. The p-type MOSFET comprises a p-channel MOSFETs to implement logic gates and other digital circuits. In the p-type MOSFET, defect electrons (holes) form the majority charge carriers. The n-type MOSFET comprises an n-channel MOSFETs to implement logic gates and other digital circuits. In the n-type MOSFET, electrons (holes) form the majority charge carriers.

According to the embodiments, the Save and Share current circuitry comprises the first n-type MOSFET, the second n-type MOSFET and the save and share current storing device, wherein in the first phase of the discharging phase, the first n-type MOSFET is turned off and the second n-type MOSFET is turned oon, and in the second phase of the discharging phase, the first n-type MOSFET is turned on and the second n-type MOSFET is turned off.

According to the invention, the save and share current storing device is capacitor or a MOSFET device acting as a capacitor.

According to the embodiments, the circuitry further comprises a buffer block, wherein the buffer block is configured to receive the modulation signal and deliver the modulation signal to the mix driver, and the mixing driver is configured to charge or discharge the pixels of the time of flight pixel chip based on the modulation signal.

The buffer block may be a clock buffer for distributing multiple copies of a modulation signal to the pixel chip with the same frequency requirements. The buffer block may be Integrated circuit with integrated logic and may be configured to include functions such as signal level format translation, voltage level translation, multiplexing and input frequency division. The buffer block may save board space and cost by eliminating additional timing components, external voltage dividers or signal level transition circuits.

According to the embodiments, the buffer block comprises a first inverting buffer and a second inverting buffer, and wherein the first inverting buffer is configured to invert the modulation signal and provide the inverted modulation signal to the second inverting buffer, and the second inverting buffer is configured to invert the inverted modulation signal and provide the modulation signal to the mix driver.

The inverting buffer is a buffer device with an input that generates an output opposite to the input. When the input is high, the output of the inverting buffer is low and vice versa.

According to the embodiments, the source of the first p-type MOSFET is connected to the power supply, the drain of the first p-type MOSFET is connected to the source of the second p-type MOSFET and the Save and Share current storing device, the source of second p-type MOSFET is connected to the drain of the first p-type MOSFET and the Save and Share current storing device, the drain of the second p-type MOSFET is connected to the second Save and Share current circuitry and the pixel chip, and the gate of the first p-type MOSFET is connected to the output of the first inverting buffer and the gate of the second p-type MOSFET is connected to the output of the second inverting buffer.

According to the embodiments, the source of the first p-type MOSFET is connected to the power supply, the drain of the first p-type MOSFET is connected to the source of the second p-type MOSFET and the Save and Share current storing device, the source of second p-type MOSFET is connected to the drain of the first p-type MOSFET and the Save and Share current storing device, the drain of the second p-type MOSFET is connected to the second Save and Share current circuitry and the pixel chip, and the gate of the first p-type MOSFET is connected to a control circuit and the gate of the second p-type MOSFET is connected to the control circuit, wherein the control circuit is configured to provide a first control signal to the gate of the first p-type MOSFET and a second control signal to the gate of the second p-type MOSFET, wherein the duty cycle of the first control signal is bigger than the duty cycle of the second control signal.

The control circuit is configured to concentrate the current sharing in order to improve rising and falling times of the modulation signal provided to the pixel chip via the circuitry.

According to the embodiments, the drain of the first n-type MOSFET is connected to the first Save and Share current circuitry and the pixel chip, the source of the first n-type MOSFET is connected to the drain of the second n-type MOSFET and the Save and Share current storing device, and the drain of the second n-type MOSFET is connected to the source of the first n-type and the Save and Share current storing device, and the source of the second n-type MOSFET is connected to ground, and the gate of the first n-type MOSFET is connected to the output of the second inverting buffer and the gate of the second n-type MOSFET is connected to the output of the first inverting buffer. According to the embodiments, the drain of the first n-type MOSFET is connected to the first Save and Share current circuitry and the pixel chip, the source of the first n-type MOSFET is connected to the drain of the second n-type MOSFET and the Save and Share current storing device, the drain of the second n-type MOSFET is connected to the source of the first n-type and the Save and Share current storing device, and the source of the second n-type MOSFET is connected to ground, and the gate of the first n-type MOSFET is connected to a control circuit and the gate of the second n-type MOSFET is connected to the control circuit, wherein the control circuit is configured to provide a third control signal to the gate of the first n-type MOSFET and a fourth control signal to the gate of the second n-type MOSFET, wherein the duty cycle of the fourth control signal is bigger than the duty cycle of the third control signal.

According to the embodiments, a first power supply and a second power supply is connected to the Save and Share current circuitry, wherein the supply voltage of the first power supply is higher than the supply voltage of the power supply and the supply voltage of the second power supply has a negative value.

According to the embodiments, the circuitry comprises a first circuitry according to the embodiments and a second circuitry according to the embodiments, wherein a shared transistor is placed between the first circuitry and the second circuitry configured to transmit the charge of the first circuitry to the second circuitry or the charge of the second circuitry to the first circuitry of the logic chip based on a control signal.

The shared transistor may be a n-type MOSFET. The shared transistor is included between the first circuitry and the second circuitry for current sharing between opposite mixing phases.

The embodiments also disclose a method, comprising: providing a modulation signal to pixels of a time of flight pixel chip; and saving charge provided by a power supply, by at least one Save and Share current circuitry connected to a mix driver; and sharing the saved charge to the pixels of the time of flight pixel chip, by the Save and Share current circuitry.

The embodiments also disclose a computer program, comprising instructions, the instructions when executed on a processor controlling a mix driver of a time of flight camera according to the method.

The embodiments also disclose a time-of-flight system comprising the circuitry according to the embodiments, a light source and an image sensor.

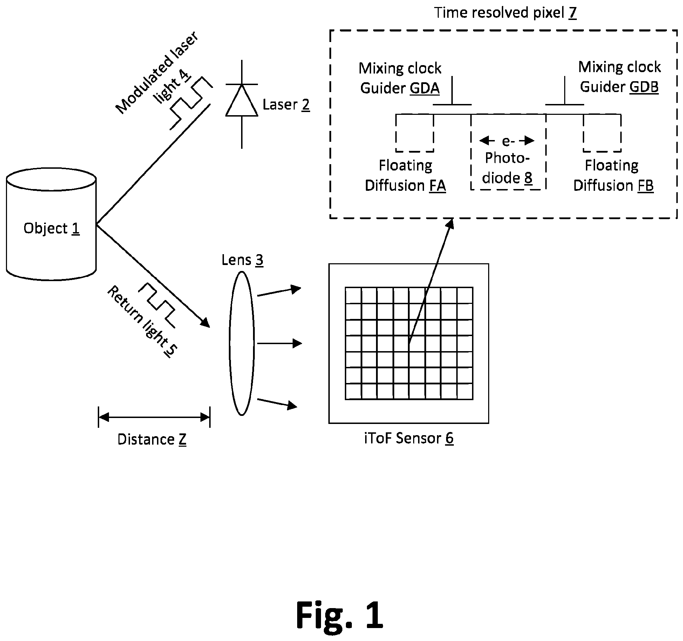

Fig. 1 schematically illustrates the basic operational principle of an indirect time-of-flight (iToF) camera. The iToF camera includes an illumination unit (laser) 2, a lens 3 and an iToF sensor 6. The iToF sensor 6 includes a time resolved pixel array 7. The time resolved pixel 7 includes two floating diffusions FA, FB, two mixing clock guiders GDA, GDB and a photodiode 8. The mixing clock guiders GDA, GDB are controlled by a synchronized clock with a modulation clock in the illumination unit (laser) 2. The photodiode 8 generates electrons based on incident photons. The generated electrons are guided to the floating diffusion FA or to the floating diffusion FB since complementary clocks are applied to the two mixing clock guiders GDA and GDB.

An object 1 is actively illuminated with a modulated light 4 at a predetermined wavelength using the dedicated illumination unit 2, for instance with some light pulses of at least one predetermined frequency generated by a timing generator (not shown in Fig. 1). The modulated light 4 is returned from the object 1. A lens 3 collects the returning light 5 and forms an image of the objects onto the iToF sensor 6 of the camera. Depending on the distance Z of objects from the camera, a delay is experienced between the emission of the modulated light 4, e.g. the so-called light pulses, and the reception at the camera of those returned light pulses 5.

Indirect time-of-flight (iToF) cameras calculate a delay between modulated light 4 and returned light 5 for obtaining depth measurements by sampling a correlation wave, e.g. between a demodulation signal generated by the timing generator and the reflected light 5 that is stored in a time resolved pixel 7.

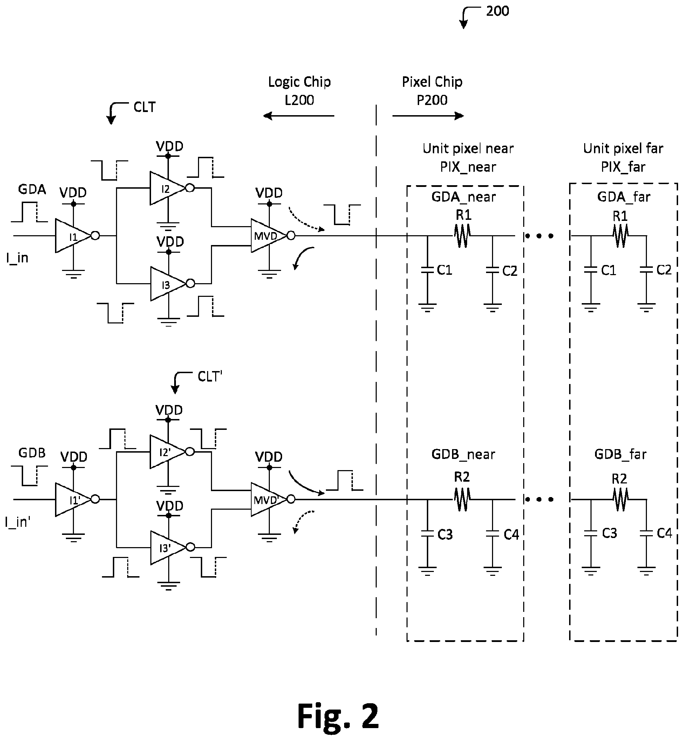

Fig. 2 shows, as an example, a conventional Mix driver circuit (MV) with modulation signals at different points of its last stages.

The Mix driver circuit (MV) 200 comprises a logic chip L200 and a pixel chip P200, where the pixel chip P200 represented in Fig. 2 is modelized by a simplified distributed RC parasitic model. The inputs signals required for the pixel chip P200 are generated by logic circuits (not shown in Fig. 2) and then distributed by the logic chip L200 to the pixel chip P200.

The logic chip L200 comprises two inputs I_in, I_in', where a modulation signal GDA is supplied to the input I_in and a modulation signal GDB is supplied to the input I_in'. The logic chip L200 further comprises two buffer blocks CLT, CLT'. The modulation signal GDA is delivered to the pixel chip P200 via the buffer block CLT and the modulation signal GDB is delivered to the pixel chip P200 via the buffer block CLT'. The voltages of the modulation signals GDA, GDB periodically change from ground GND to a predetermined voltage, and the two modulation signals GDA, GDB have a phase shift of 180 degrees. Frequencies used for the modulation signals GDA, GDB may be in the range of several tens of MHz to several hundreds of MHz. Each of the buffer blocks CLT, CLT' comprises three inverting buffers I1, I2, I3; I1', I2', I3' and a Mix driver MVD; MVD'. Each of the inverting buffers I1, I2, I3; I1', I2', I3' and the Mix drivers MVD; MVD' is connected to a ground GND and a power supply VDD. Each of the inverting buffers I1, I2, I3; I1', I2', I3' and the Mix drivers MVD; MVD' may be enabled when power is supplied through the power supply VDD. The inverting buffers I2 and I3 (I2' and I3') may have a slight phase difference to avoid through current in the Mix driver MVD (MVD').

The pixel chip P200 comprises several unit pixels (unit pixel near, ..., unit pixel far). Each of the unit pixels comprises parasitic storage capacitances C1, C2, C3, C4 and parasitic resistors R1, R2. The parasitic storage capacitances C1, C2, C3, C4 build a load capacitance that is charged from GND (ground) to VDD (supply voltage) and discharged from VDD to GND periodically. The parasitic resistors R1, R2 may be placed between parasitic storage capacitances C1, C2, and, respectively, C3, C4. The input of the buffer block CLT is connected to the first input I_in and the output of the buffer block CLT is connected to the upper trace of the unit pixel chip P200. The input of the buffer block CLT' is connected to the second input I_in' and the output of the buffer block CLT is connected to the lower trace of the unit pixel chip P200.

The solid line of the modulation signal GDA and the arrows represent a discharging phase (the pixel signal GDA goes to ground) and the dotted line of the modulation signals GDA, and the arrows represent a charging phase (the pixel signal GDA goes to the power supply). The solid line of the modulation signal GDB and the arrows represent a charging phase (the pixel signal GDB goes to power supply) and the dotted line of the modulation signals GDB, and the arrows represent a discharging phase (the pixel signal GDB goes to the power supply).In the charging phase of the modulation signal GDA the upper storage capacitances C1, C2 of the unit pixels are charged, and in the charging phase of the modulation signal GDB the lower storage capacitances C3, C4 of the unit pixels are charged. In the discharging phase of the modulation signal GDA the upper storage capacitances C1, C2 of the unit pixels are discharged, and in the discharging phase of the modulation signal GDB the lower storage capacitances C3, C4 of the unit pixels are discharged. The voltage waveform GDA_near corresponds to the upper load capacitance from the unit pixel (unit pixel near) at closer side to the MV driver, the unit pixel which the modulation signals GDA, GDB reaches first. The voltage waveform GDA_far corresponds to the upper load capacitance from the far unit pixel (unit pixel far), the unit pixel which the modulation signals GDA, GDB reaches last. Mix driver circuit (MV) with Save and Share current (S&SIC) circuits

Fig. 3 shows, a first embodiment of a circuitry of a Mix driver circuit (MV) of a Time of Flight (ToF) image sensor with Save and Share current (S&SIC) circuits.

In order to reduce the redundancy and to improve the understanding only one-pixel line (the upper part where the modulation signal GDA is provided) of the Mix driver circuit (MV) is illustrated in Fig. 3. The lower part, where the modulation signal GDB is provided has the same configuration as the upper part as illustrated in Fig. 3.

The Mix driver circuit (MV) 500 comprises a logic chip L500 and a pixel chip P500, where the pixel chip P500 represented in Fig. 3 is modelized by a simplified distributed RC parasitic model. The inputs signals required for the pixel chip P500 are generated by logic circuits (not shown in Fig. 3) and then distributed by the logic chip L500 to the pixel chip P500.

The logic chip L500 comprises an input I_in and a buffer block CLT500, where a modulation signal GDA is supplied to the input I_in and is delivered to the pixel chip P500 via the buffer block CLT500. The voltage of the modulation signal GDA periodically changes from ground GND to a predetermined voltage (VDD). Frequencies used for the modulation signal GDA may be in the range of several tens of MHz to several hundreds of MHz. The buffer block CLT500 comprises two inverting buffers I501, I502, and a Mix driver MVD. Each of the inverting buffers I501, I502 and the Mix driver MVD is connected to a ground GND and a power supply VDD. Each of the inverting buffers I501, I502 and the Mix driver MVD may be enabled when power is supplied through the power supply VDD. The logic chip L500 further comprises a first Save and Share current (S&SIC) circuitry S1 and a second Save and Share current (S&SIC) circuitry S2. The first S&SIC circuitry S1 comprises a first p-type MOSFET T1_1, a second p-type MOSFET T1_2 and a save and share current capacitor (S&SIC) CS1. The source of the first p-type MOSFET T1_1 is connected to the power supply VDD. The drain of the first p-type MOSFET T1_1 is connected to the source of the second p-type MOSFET T1_2 and the S&SIC CS1. The gate of the first p-type MOSFET T1_1 is connected to the output of the first inverting buffer I501. The source of the second p-type MOSFET T1_2 is connected to the drain of the first p-type MOSFET T1_1 and the S&SIC CS1. The drain of the second p-type MOSFET T1_2 is connected to the second S&SIC circuitry S2, the output of the Mix driver MVD and the pixel chip P500. The gate of second p-type MOSFET T1_2 is connected to the output of the second inverting buffer I502. The second S&SIC circuitry S2 comprises a first n-type MOSFET T2_1, a second n-type MOSFET T2_2 and a save and share current capacitor (S&SIC) CS2. The drain of the first n-type MOSFET T2_1 is connected to the drain of the second p-type MOSFET T1_2 of the first S&SIC circuitry S1, the output of the Mix driver MVD and the pixel chip P500. The source of the first n-type MOSFET T2_1 is connected to the drain of the second n-type MOSFET T2_2 and the S&SIC CS2. The gate of the first n-type MOSFET T1_1 is connected to the output of the second inverting buffer I502. The drain of the second n-type MOSFET T2_2 is connected to the source of the first n-type MOSFET T2_1 and the S&SIC CS2. The source of the second n-type MOSFET T2_2 is connected to the ground. The gate of the second n-type MOSFET T2_2 is connected to the output of the first inverting buffer I501. S&SIC CS1 and S&SIC CS2 may be a capacitor of comparable capacitance with guiding lines parasitic capacitance, e.g. 4pF capacitor.

The pixel chip P500 comprises several unit pixels (unit pixel near, ..., unit pixel far). Each unit pixel comprises parasitic storage capacitances C1, C2 and a parasitic resistor R1. The parasitic storage capacitances C1, C2 build a load capacitance that is charged from GND (ground) to VDD (supply voltage) and discharged from VDD to GND periodically. The parasitic resistor R1 may be placed between parasitic storage capacitances C1, C2. The input of the buffer block CLT500 is connected to the input I_in and the output of the buffer block CLT500 is connected to the unit pixel chip P500.

The solid line of the modulation signal GDA and the arrows in Fig. 3 represents a discharging phase and the dotted line of the modulation signal GDA and the arrows in Fig. 3 represent a charging phase. The charging phase of the modulation signal GDA comprises a first step of charging and a second step of charging, wherein the second step is generated by first step clock passing I502 with certain delays. During the first step of charging the positive current provided by the power supply is saved in the upper S&SIC CS1 and during a second step of charging the positive charge saved in the S&SIC CS1 is transferred to the pixel chip P500. Therefore, the S&SIC CS1 is configured to help the Mix driver MVD with the charging of the pixel units in the pixel chip P500. The discharging phase of the modulation signal GDA comprises a first step of discharging and a second step of discharging, wherein the second step is generated by first step clock passing I502 with certain delays. During the first step of discharging the negative charge provided by the power supply is saved in the lower S&SIC CS2 and during a second step of discharging the negative charge saved in the S&SIC CS2 is shared to the pixel chip P500. Therefore, the S&SIC CS2 is configured to help the Mix driver MVD with the discharging of the pixel units in the pixel chip P500.

Because of the help of the extra stage that does not suppose a significant impact on the average current and the decoupling effect that the extra capacitor supposes, even if the transistors T1_1, T1_2, T2_1 and T2_2 may suppose a load for the initial Mix driver stages, the total average and peak to peak current consumption may be reduced. Consequently, the power consumption is reduced compared to the Mix driver circuit (MV) presented in Fig. 2 and the rising and falling slopes are also improved.

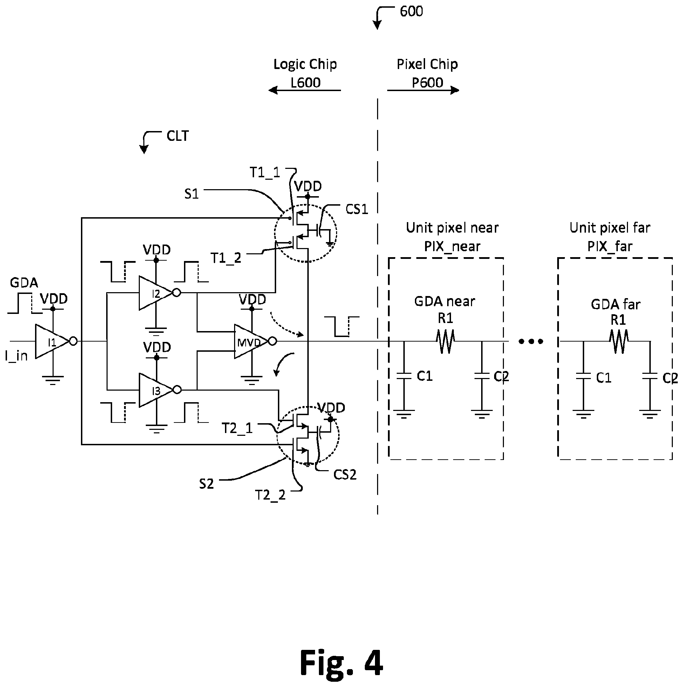

Fig. 4 shows, a second embodiment of a circuitry of a Mix driver circuit (MV) of a Time of Flight (ToF) image sensor with Save and Share current (S&SIC) circuits.

In other to reduce the redundancy and to improve the understanding only one-pixel line (the upper part where the modulation signal GDA is provided) of the Mix driver circuit (MV) is illustrated in Fig. 4. The lower part, the part where the modulation signal GDB is provided has the same configuration as the upper part as illustrated in Fig. 4.

The Mix driver circuit (MV) 600 comprises a logic chip L600 and a pixel chip P600, where the pixel chip P600 represented in Fig. 4 is modelized by a simplified distributed RC parasitic model. The inputs signals required for the pixel chip P600 are generated by logic circuits (not shown in Fig. 4) and then distributed by the logic chip L600 to the pixel chip P600.

The logic chip L600 comprises an input I_in and a buffer block CLT, where a modulation signal GDA is supplied to the input I_in and is delivered to the pixel chip P600 via the buffer block CLT. The voltage of the modulation signal GDA periodically changes from ground GND to a predetermined voltage (VDD). Frequencies used for the modulation signal GDA may be in the range of tens of MHz to hundreds of MHz. The buffer block CLT comprises three inverting buffers I1, I2, I3, a Mix driver MVD. Each of the inverting buffers I1, I2, I3 and the Mix driver MVD is connected to a ground GND and to a power supply (VDD). Each of the inverting buffers I1, I2, I3 and the Mix driver MVD may be enabled when power is supplied through the power supply VDD. The inverting buffers I2 and I3 may have a slight phase difference to avoid through current in the Mix driver MVD. The logic chip L600 further comprises a first Save and Share current (S&SIC) circuity S1 and a second Save and Share current (S&SIC) circuity S2. The first S&SIC circuity S1 comprises a first p-type MOSFET T1_1, a second p-type MOSFET T1_2 and a save and share current capacitor (S&SIC) CS1. The source of the first p-type MOSFET T1_1 is connected to the power supply. The drain of the first p-type MOSFET T1_1 is connected to the source of the second p-type MOSFET T1_2 and the S&SIC CS1. The gate of the first p-type MOSFET T1_1 is connected to the output of the first inverting buffer I1. The source of the second p-type MOSFET T1_2 is connected to the drain of the first p-type MOSFET T1_1 and the S&SIC CS1. The drain of the second p-type MOSFET T1_2 is connected to the second S&SIC circuity S2, the output of the Mix driver MVD and the pixel chip P600. The gate of second p-type MOSFET T1_2 is connected to the output of the second inverting buffer I2. The second S&SIC circuity S2 comprises a first n-type MOSFET T2_1, a second n-type MOSFET T2_2 and a save and share current capacitor (S&SIC) CS2. The drain of the first n-type MOSFET T2_1 is connected to the drain of the second p-type MOSFET T1_2 of the first S&SIC circuity S1, the output of the Mix driver MVD and the pixel chip P600. The source of the first n-type MOSFET T2_1 is connected to the drain of the second n-type MOSFET T2_2 and the S&SIC CS2. The gate of the first n-type MOSFET T1_1 is connected to the output of the third inverting buffer I3. The drain of the second n-type MOSFET T2_2 is connected to the source of the first n-type MOSFET T2_1 and the S&SIC CS2. The source of the second n-type MOSFET T2_2 is connected to the ground. The gate of the second n-type MOSFET T2_2 is connected to the output of the first inverting buffer I1. S&SIC CS1 and S&SIC CS2 may be a capacitor of comparable capacitance with guiding lines parasitic capacitance, e.g. a 4pF capacitor.

The pixel chip P600 is modelled by a distributed unit pixels (unit pixel near, ..., unit pixel far). Each unit pixel comprises parasitic storage capacitances C1, C2 and a parasitic resistor R1. The parasitic storage capacitances C1, C2 build a load capacitance that is charged from GND (ground) to VDD (supply voltage) and discharged from VDD to GND periodically. The parasitic resistor R1 may be placed between parasitic storage capacitances C1, C2. The input of the buffer block CLT is connected to the input I_in and the output of the buffer block CLT is connected to the unit pixel chip P600.

The solid line of the modulation signal GDA and the arrows in Fig. 4 represents a discharging phase and the dotted line of the modulation signal GDA and the arrows in Fig. 4 represent a charging phase. The charging phase of the modulation signal GDA comprises a first step of charging and a second step of charging, wherein the second step is generated by first step clock passing I2 with certain delays. During the first step of charging the positive current provided by the power supply is saved in the upper S&SIC CS1 and during a second step of charging the positive charge saved in the S&SIC CS1 is transferred to the pixel chip P600. Therefore, the S&SIC CS1 is configured to help the Mix driver MVD with the charging of the pixel units in the pixel chip P600. The discharging phase of the modulation signal GDA comprises a first step of discharging and a second step of discharging, wherein the second step is generated by first step clock passing I3 with certain delays. During the first step of discharging the negative charge provided by the power supply is saved in the lower S&SIC CS2 and during a second step of discharging the negative charge saved in the S&SIC CS2 is shared to the pixel chip P600. Therefore, the S&SIC CS2 is configured to help the Mix driver MVD with the discharging of the pixel units in the pixel chip P600. The voltage waveform GDA_near corresponds to the upper load capacitance from the near unit pixel, the unit pixel which the modulation signals GDA, GDB reaches first. The voltage waveform GDA_far corresponds to the upper load capacitance from the far unit pixel, the unit pixel which the modulation signals GDA, GDB reaches last.

Because of the help of the extra stage that does not suppose a significant impact on the average current and the decoupling effect that the extra capacitor supposes, even if the transistors T1_1, T1_2, T2_1 and T2_2 may suppose a load for the initial Mix driver stages, the total average and peak to peak current consumption may be reduced. Consequently, the power consumption is reduced compared to the Mix driver circuit (MV) presented in Fig. 2 and the rising and falling slopes are also improved.

The rising time of the voltage waveforms (GDA_near, GDA_far in Fig. 4) of the Mix driver circuit (MV) with Save and Share current (S&SIC) circuits is shorter than the rising time of the Mix driver circuit (MV) of Fig. 2. The falling time of the voltage waveforms (GDA_near, GDA_far in Fig. 4) of the Mix driver circuit (MV) with Save and Share current (S&SIC) circuits is shorter than the falling time of the Mix driver circuit (MV) of Fig. 2.

The total average and peak to peak current consumption may be reduced because the current consumption of the driver output stage may be reduced by 3.7 % by the aid of the Save and Share current (S&SIC) circuits.

### Mix driver circuit (MV) with Save and Share current (S&SIC) circuits and an additional control circuit/clock

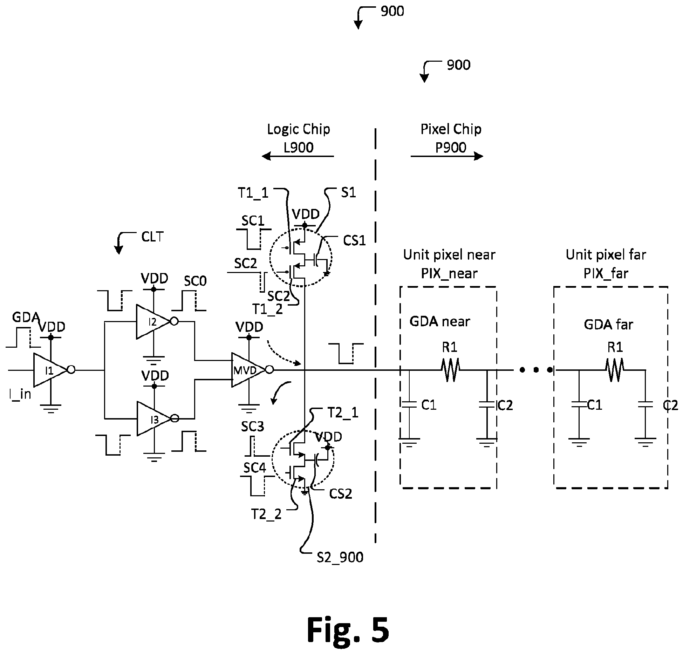

Fig. 5 shows, a third embodiment of a circuitry of a Mix driver circuit (MV) of a Time of Flight (ToF) image sensor with S&SIC circuits and an additional control circuit/clock.

In other to reduce the redundancy and to improve the understanding only one-pixel line (the upper part where the modulation signal GDA is provided) of the Mix driver circuit (MV) is illustrated in Fig. 5. The lower part, the part where the modulation signal GDB is provided has the same configuration as the upper part as illustrated in Fig. 5.

The Mix driver circuit (MV) 900 comprises a logic chip L900 and a pixel chip P900, where the pixel chip P900 represented in Fig. 5 is modelized by a simplified distributed RC parasitic model. The inputs signals required for the pixel chip P900 are generated by logic circuits (not shown in Fig. 5) and then distributed by the logic chip L900 to the pixel chip P900.

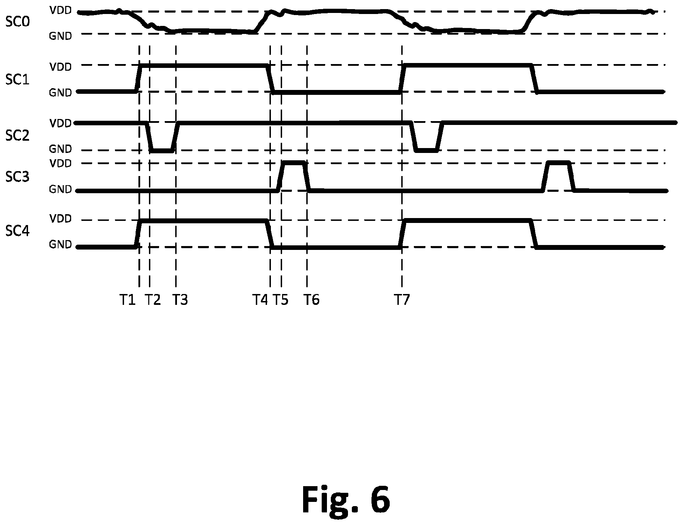

The logic chip L900 comprises an input I_in and a buffer block CLT, where a modulation signal GDA is supplied to the input I_in and is delivered to the pixel chip P900 via the buffer block CLT. The voltage of the modulation signal GDA periodically changes from ground GND to a predetermined voltage (VDD). Frequencies used for the modulation signal GDA may be in the range of tens of MHz to hundreds of MHz. The buffer block CLT comprises three inverting buffers I1, I2, I3, a Mix driver MVD. Each of the inverting buffers I1, I2, I3 and the Mix driver MVD is connected to a ground GND and a power supply VDD. Each of the inverting buffers I1, I2, I3 and the Mix driver MVD may be enabled when power is supplied through the power supply VDD. The inverting buffers I2 and I3 may have a slight phase difference to avoid through current in the Mix driver MVD. The logic chip L900 further comprises a first Save and Share current (S&SIC) circuity S1 and a second Save and Share current (S&SIC) circuity S2. The first S&SIC circuity S1 comprises a first p-type MOSFET T1_1, a second p-type MOSFET T1_2 and a save and share current capacitor (S&SIC) CS1. The source of the first p-type MOSFET T1_1 is connected to the power supply. The drain of the first p-type MOSFET T1_1 is connected to the source of the second p-type MOSFET T1_2 and the S&SIC CS1. The gate of the first p-type MOSFET T1_1 is connected to an additional control circuit (control signal generator) (not shown in Fig. 5) and receives a first control signal SC1. The additional control circuit is configured to generate control signals to the S&SIC circuits, to adapt the control timing of the transistors in the S&SIC circuits for a better falling/rising time of the Mix driver circuit (MV). The source of the second p-type MOSFET T1_2 is connected to the drain of the first p-type MOSFET T1_1 and the S&SIC CS1. The drain of the second p-type MOSFET T1_2 is connected to the second S&SIC circuity S2, the output of the Mix driver MVD and the pixel chip P900. The gate of second first p-type MOSFET T1_2 is connected to the additional control circuit and receives a second control signal SC2. The second S&SIC circuity S2 comprises a first n-type MOSFET T2_1, a second n-type MOSFET T2_2 and a save and share current capacitor (S&SIC) CS2. The drain of the first n-type MOSFET T2_1 is connected to the drain of the second p-type MOSFET T1_2 of the first S&SIC circuity S1, the output of the Mix driver MVD and the pixel chip P900. The source of the first n-type MOSFET T2_1 is connected to the drain of the second n-type MOSFET T2_2 and the S&SIC CS2. The gate of the first n-type MOSFET T1_1 is connected to the additional control circuit and receives a third control signal SC3. The drain of the second n-type MOSFET T2_2 is connected to the source of the first n-type MOSFET T2_1 and the S&SIC CS2. The source of the second n-type MOSFET T2_2 is connected to the ground. The gate of the second n-type MOSFET T2_2 is connected to the additional control circuit and receives a fourth control signal SC4. The duty cycle of the second control signal SC2 is bigger than the duty cycle of the first control signal SC1 and the duty cycle of the third control signal SC3 is smaller than the duty cycle of the fourth control signal SC4. The timing diagram of the respective control signals is provided in more detail in Fig. 6. The difference in the duty cycle of the respective control signals enables that while the charge is saved during a whole half period, the sharing is concentrated during a much shorter time so that the current is transferred at the charging (or discharging) moment to further improve rising and falling times. In Fig. 5, the buffer block CLT comprises three inverting buffers, however, the buffer block CLT may comprises only two inverting buffers as illustrated in Fig. 3.

The pixel chip P900 comprises several unit pixels (unit pixel near, ..., unit pixel far). Each unit pixel comprises parasitic storage capacitances C1, C2 and a parasitic resistor R1. The parasitic storage capacitances C1, C2 build a load capacitance that is charged from GND (ground) to VDD (supply voltage) and discharged from VDD to GND periodically. The parasitic resistor R1 may be placed between parasitic storage capacitances C1, C2. The input of the buffer block CLT is connected to the input I_in and the output of the buffer block CLT is connected to the unit pixel chip P900.

The solid line of the modulation signal GDA, the control signals and the arrows in Fig. 5 represent a discharging phase and the dotted line of the modulation signal GDA, the control signals and the arrows in Fig. 5 represent a charging phase. The voltage waveform GDA_near corresponds to the upper load capacitance from the near unit pixel, the unit pixel which the modulation signals GDA, GDB reaches first. The voltage waveform GDA_far corresponds to the upper load capacitance from the far unit pixel, the unit pixel which the modulation signals GDA, GDB reaches last.

The circuitry of a Mix driver circuit (MV) with S&SIC circuits and an additional control is configured to get better use of the sharing stage. The additional circuit to generate the control signals (pulses) is not shown in Fig. 5, however, any kind of control circuit which is known to the skilled person may be used which is configured to generate a control signal (pulse). Preferably, the control circuit may have a simple structure and has a small power consumption.

The Mix driver circuit (MV) with S&SIC circuits and an additional control circuit (driver) is configured to save the charge of the modulation signal during a whole half period of the modulation signal, wherein the sharing of the modulation signal is concentrated during a shorter time than the charging time so that the charge is transferred at the charging (or discharging) moment. Consequently, the Mix driver circuit (MV) with S&SIC circuits and an additional control circuit (driver) further improves the performance of the rising and falling times.

Fig. 6 shows, as an example, a timing diagram of the control signals of the circuitry of a Mix driver circuit (MV) with S&SIC circuits and an additional control circuit.

The control signal SC0 illustrates the input signal to the Mix driver (MVD in Fig. 5) of the Mix driver circuit (MV), which is based on the modulation signal (GDA in Fig. 5). The control signal SC1 illustrates the input signal to the gate of the first p-type MOSFET (T1_1 in Fig. 5) of the Mix driver circuit of Fig. 5. The control signal SC2 illustrates the input signal to the gate of the second p-type MOSFET (T1_2 in Fig. 5) of the Mix driver circuit of Fig. 5. The control signal SC3 illustrates the input signal to the gate of the first n-type MOSFET (T2_1 in Fig. 5) of the Mix driver circuit of Fig. 5. The control signal SC4 illustrates the input signal to the gate of the second n-type MOSFET (T2_2 in Fig. 5) of the Mix driver circuit of Fig. 5. At time T1, the first p-type MOSFET (T1_1 in Fig. 5) is turned off and the second n-type MOSFET (T2_2 in Fig. 5) is turned on. The second p-type MOSFET (T1_2 in Fig. 5) is turned on at time T2 and turned off at time T3. At time T4, the first p-type MOSFET (T1_1 in Fig. 5) is turned on and the second n-type MOSFET (T2_2 in Fig. 5) is turned off. The second n-type MOSFET (T2_1 in Fig. 5) is turned on at time T5 and turned off at time T6. At time T7, the first p-type MOSFET (T1_1 in Fig. 5) is turned off and the second n-type MOSFET (T2_2 in Fig. 5) is turned on, and the timing diagram is repeated. During the time phase T4 to T7, the Save and Share current capacitor (CS1 in Fig. 5) of the first Save and Share current (S&SIC) circuity (S1 in Fig. 5) is charged, and during the time phase T2 to T3, the charged current in the Save and Share current capacitor (CS1 in Fig. 5) of the first S&SIC circuity (S1 in Fig. 5) is transferred. During the time phase T1 to T4, the current in the Save and Share current capacitor (CS2 in Fig. 5) of the second S&SIC circuity (S2 in Fig. 5) is discharged, and during the time phase T5 to T6, the Save and Share current capacitor (CS1 in Fig. 5) of the second S&SIC circuity (S2 in Fig. 5) is charged.

The rising time of the voltage waveforms (GDA_near, GDA_far in Fig. 5) of the Mix driver circuit (MV) with Save and Share current capacitors (S&SIC) circuits and an additional control circuit is shorter than the rising time of the Mix driver circuit (MV) of Fig. 2. In other words, the falling time of the voltage waveforms (GDA_near, GDA_far in Fig. 5) of the Mix driver circuit (MV) with Save and Share current (S&SIC) circuits and an additional control circuit is shorter than the falling time of the Mix driver circuit (MV) of Fig. 2.

### Mix driver circuit (MV) with Save and Share current (S&SIC) circuits, an additional control circuit/clock and a shared transistor

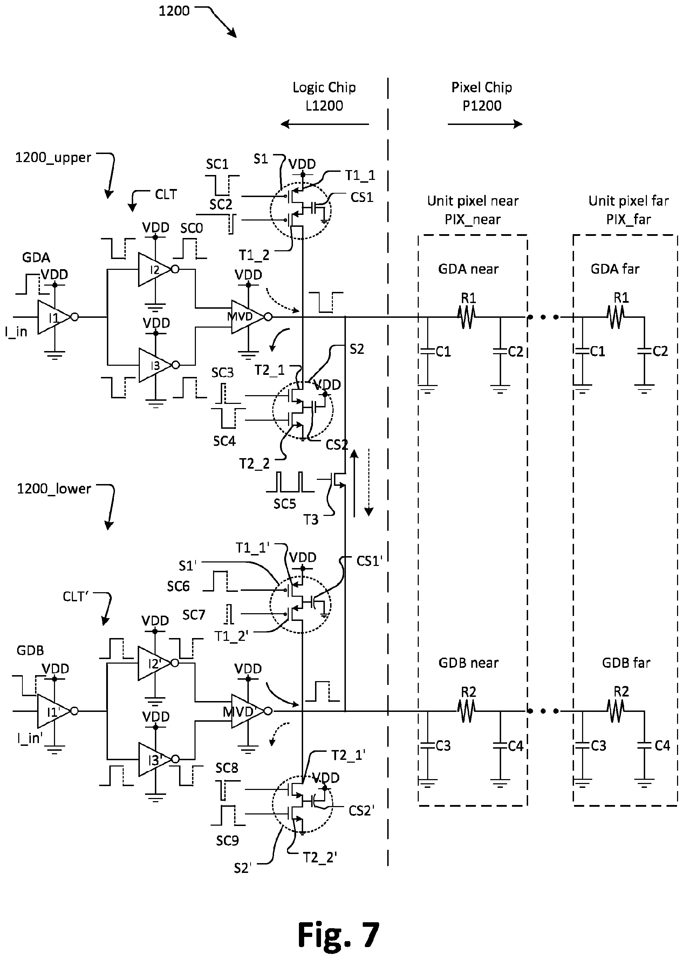

Fig. 7 shows, a fourth embodiment of a circuitry of a Mix driver circuit (MV) of a Time of Flight (ToF) image sensor with S&SIC circuits, an additional control circuit and a shared transistor.

The Mix driver circuit (MV) 1200 comprises a logic chip L1200 and a pixel chip P1200, where the pixel chip P1200 represented in Fig. 7 is modelized by a simplified distributed RC parasitic model. The inputs signals required for the pixel chip P1200 are generated by logic circuits (not shown in Fig. 7) and then distributed by the logic chip L1200 to the pixel chip P1200.

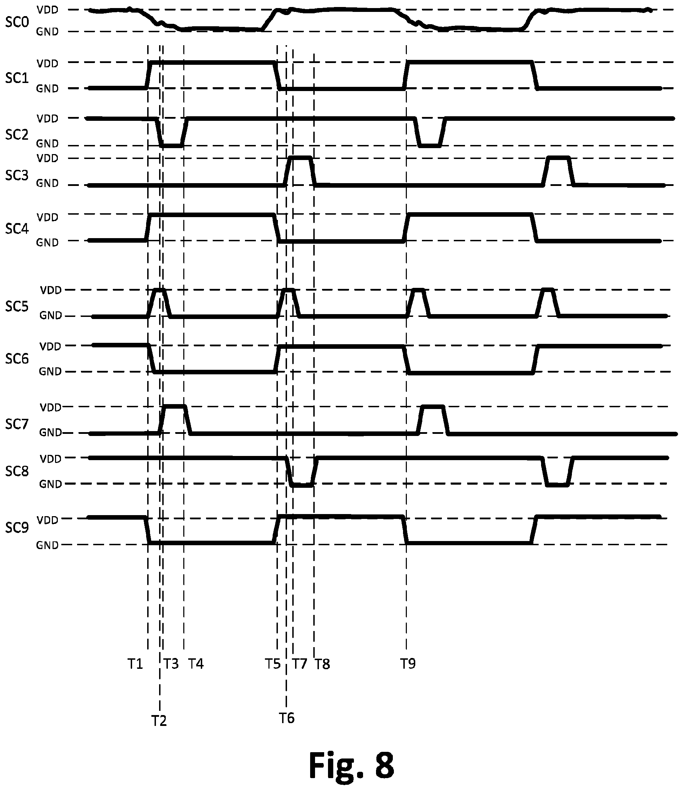

The logic chip L1200 comprises an upper part 1200_upper and a lower part 1200_lower. The upper part 1200_upper of the logic chip L1200 comprises an input I_in where a modulation signal GDA is supplied and a buffer block CLT. The lower part 1200_lower of the logic chip L1200 comprises an input I_in' where a modulation signal GDB is supplied and a buffer block CLT'. The modulation signal GDA is delivered to the pixel chip P1200 via the buffer block CLT and the modulation signal GDB is delivered to the pixel chip P1200 via the buffer block CLT'. The voltages of the modulation signals GDA, GDB periodically change from ground GND to a predetermined voltage (VDD), and the two modulation signals GDA, GDB have a phase shift of 180 degrees. Frequencies used for the modulation signals GDA, GDB may be in the range of tens of MHz to hundreds of MHz. Each of the buffer block CLT, CLT' comprises three inverting buffers I1, I2, I3; I1', I2', I3', a Mix driver MVD; MVD'. Each of the inverting buffers I1, I2, I3; I1', I2', I3' and the Mix driver MVD; MVD' is connected to a ground GND and a power supply VDD. Each of the inverting buffers I1, I2, I3; I1', I2', I3' and the Mix driver MVD; MVD' may be enabled when power is supplied through the power supply VDD. The inverting buffers I2 and I3 (I2' and I3') may have a slight phase difference to avoid through current in the Mix driver MVD (MVD'). The logic chip L1200 further comprises a first Save and Share current (S&SIC) circuity S1, a second Save and Share current (S&SIC) circuity S2, a third Save and Share current (S&SIC) circuity S1', a fourth Save and Share current (S&SIC) circuity S2' and a shared transistor (switch) T3. The shared transistor T3 is located before the pixel chip P1200 and after the Save and Share current (S&SIC) circuits, wherein in the shared transistor T3 is configured to transfer the charge of the upper part 1200_upper to the lower part 1200_lower or the charge of the lower part 1200_lower to the upper part 1200_ upper of the logic chip based on a control signal SC5. While the transistor T3 is turned on the charge of a pixel line (upper part or lower part) is transmitted to the opposite line providing it with an extra current to the charging and discharging. The first S&SIC circuity S1 comprises a first p-type MOSFET T1_1, a second p-type MOSFET T1_2 and a save and share current capacitor (S&SIC) CS1. The source of the first p-type MOSFET T1_1 is connected to the power supply. The drain of the first p-type MOSFET T1_1 is connected to the source of the second p-type MOSFET T1_2 and the S&SIC CS1. The gate of the first p-type MOSFET T1_1 is connected to an additional control circuit/clock (control signal generator) (not shown in Fig. 7) and receives a first control signal SC1. The additional control circuit/clock is configured to the S&SIC circuits, to adapt the control timing of the transistors in the S&SIC circuits for a better falling/rising time of the Mix driver circuit (MV). The source of the second p-type MOSFET T1_2 is connected to the drain of the first p-type MOSFET T1_1 and the S&SIC CS1. The drain of the second p-type MOSFET T1_2 is connected to the second S&SIC circuity S2, the output of the Mix driver MVD and the pixel chip P1200. The gate of second first p-type MOSFET T1_2 is connected to the additional control circuit and receives a second control signal SC2. The second S&SIC circuity S2 comprises a first n-type MOSFET T2_1, a second n-type MOSFET T2_2 and a save and share current capacitor (S&SIC) CS2. The drain of the first n-type MOSFET T2_1 is connected to the drain of the second p-type MOSFET T1_2 of the first S&SIC circuity S1, the output of the Mix driver MVD and the pixel chip P1200. The source of the first n-type MOSFET T2_1 is connected to the drain of the second n-type MOSFET T2_2 and the S&SIC CS2. The gate of the first n-type MOSFET T1_1 is connected to the additional control circuit and receives a third control signal SC3. The drain of the second n-type MOSFET T2_2 is connected to the source of the first n-type MOSFET T2_1 and the S&SIC CS2. The source of the second n-type MOSFET T2_2 is connected to the ground. The gate of the second n-type MOSFET T2_2 is connected to the additional control circuit and receives a fourth control signal SC4. The duty cycle of the second control signal SC2 is bigger than the duty cycle of the first control signal SC1 and the duty cycle of the third control signal SC3 is smaller than the duty cycle of the fourth control signal SC4. The third S&SIC circuity S1' comprises a first p-type MOSFET T1_1', a second p-type MOSFET T1_2' and a save and share current capacitor (S&SIC) CS1'. The source of the first p-type MOSFET T1_1' is connected to the power supply. The drain of the first p-type MOSFET T1_1' is connected to the source of the second p-type MOSFET T1_2' and the S&SIC CS1'. The gate of the first p-type MOSFET T1_1' is connected to an additional control circuit and receives a sixth control signal SC6. The source of the second p-type MOSFET T1_2' is connected to the drain of the first p-type MOSFET T1_1' and the S&SIC CS1'. The drain of the second p-type MOSFET T1_2' is connected to the fourth S&SIC circuity S2', the output of the Mix driver MVD' and the pixel chip P1200. The gate of second first p-type MOSFET T1_2' is connected to the additional control circuit and receives a seventh control signal SC7. The fourth S&SIC circuity S2' comprises a first n-type MOSFET T2_1', a second n-type MOSFET T2_2' and a save and share current capacitor (S&SIC) CS2'. The drain of the first n-type MOSFET T2_1' is connected to the drain of the second p-type MOSFET T1_2' of the third S&SIC circuity S1', the output of the Mix driver MVD' and the pixel chip P1200. The source of the first n-type MOSFET T2_1' is connected to the drain of the second n-type MOSFET T2_2' and the S&SIC CS2'. The gate of the first n-type MOSFET T2_1' is connected to the additional control circuit and receives an eighth control signal SC8. The drain of the second n-type MOSFET T2_2' is connected to the source of the first n-type MOSFET T2_1' and the S&SIC CS2'. The source of the second n-type MOSFET T2_2' is connected to the ground. The gate of the second n-type MOSFET T2_2' is connected to the additional control circuit and receives a ninth control signal SC9. The duty cycle of the control signals SC1, SC3, SC7 and SC9 are smaller than the duty cycle of the control signals SC2, SC4, SC6 and SC8. The timing diagram of the respective control signals is provided in more detail in Fig. 8. The difference in the duty cycle of the respective control signals enables that while the charge is saved during a whole half period, the sharing is concentrated during a much shorter time so that the current is transmitted at the charging (or discharging) moment to further improve rising and falling times. S&SIC CS1, S&SIC CS2, S&SIC CS1' and S&SIC CS2' may be a capacitor of comparable capacitance with guiding lines parasitic capacitance, e.g. a 4pF capacitor. In Fig. 7, the buffer blocks CLT and CLT' each comprises three inverting buffers, however, the buffer blocks CLT and CLT' may comprise only two inverting buffers as illustrated in Fig. 3.

The pixel chip P1200 comprises several unit pixels (unit pixel near, ..., unit pixel far). Each of the unit pixels comprises parasitic storage capacitances C1, C2, C3, C4 and parasitic resistors R1, R2. The parasitic storage capacitances C1, C2, C3, C4 build a load capacitance that is charged from GND (ground) to VDD (supply voltage) and discharged from VDD to GND periodically. The parasitic resistors R1, R2 may be placed between parasitic storage capacitances C1, C2, and, respectively, C3, C4. The input of the buffer block CLT is connected to the first input I_in and the output of the buffer block CLT is connected to the upper trace of the unit pixel chip P1200. The input of the buffer block CLT' is connected to the second input I_in' and the output of the buffer block CLT' is connected to the lower trace of the unit pixel chip P1200.

The solid line of the modulation signals GDA, GDB, the control signals and the arrows in Fig. 7 represents a discharging phase of the upper pixel and the charging phase of the lower pixel and the dotted line of the modulation signal GDA, GDB, the control signals and the arrows in Fig. 7 represents a charging phase of the upper pixel and the discharging phase of the lower pixel. The voltage waveform GDA_near (GDB_near) corresponds to the upper load capacitance from the near unit pixel, the unit pixel which the modulation signals GDA (GDB) reaches first. The voltage waveform GDA_far (GDB_near) corresponds to the upper load capacitance from the far unit pixel, the unit pixel which the modulation signals GDA (GDB) reaches last.

The circuitry of a Mix driver circuit (MV) with S&SIC circuits, an additional control and a shared transistor is configured to get better use of the sharing stage. The additional circuit to generate the control signals (pulses) is not shown in Fig. 7, however, any kind of control circuit which is known to the skilled person may be used which is configured to generate a control signal (pulse). Preferably, the control circuit may have a simple structure and has a small power consumption.

Fig. 8 shows, as an example, a timing diagram of the control signals of the circuitry of a Mix driver circuit (MV) with S&SIC circuits, an additional control circuit and a shared transistor.

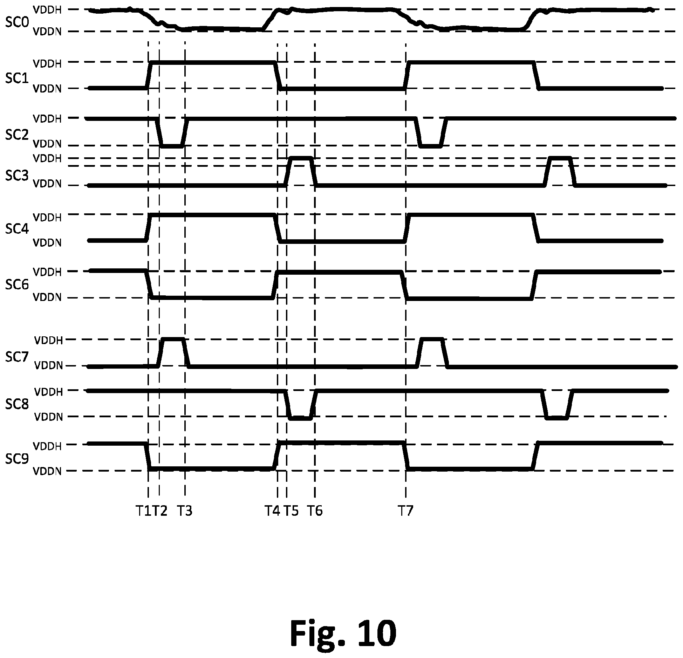

The control signal SC0 illustrates the input signal to the Mix driver (MVD in Fig. 7) of the Mix driver circuit (MV), which is based on the modulation signal (GDA in Fig. 7). The control signal SC1 illustrates the input signal to the gate of the first p-type MOSFET (T1_1 in Fig. 7) of the first S&SIC circuity (S1 in Fig. 7) of the Mix driver circuit of Fig. 7. The control signal SC2 illustrates the input signal to the gate of the second p-type MOSFET (T1_2 in Fig. 7) of the first S&SIC circuity (S1 in Fig. 7) of the Mix driver circuit of Fig. 7. The control signal SC3 illustrates the input signal to the gate of the first n-type MOSFET (T2_1 in Fig. 7) of the second S&SIC circuity (S2 in Fig. 7) of the Mix driver circuit of Fig. 7. The control signal SC4 illustrates the input signal to the gate of the second n-type MOSFET (T2_2 in Fig. 7) of the second S&SIC circuity (S2 in Fig. 7) of the Mix driver circuit of Fig. 7. The control signal SC5 illustrates the input signal to the shared transistor (T3 in Fig. 7) of the Mix driver circuit of Fig. 7. The control signal SC6 illustrates the input signal to the gate of the first p-type MOSFET (T1_1' in Fig. 7) of the third S&SIC circuity (S1' in Fig. 7) of the Mix driver circuit of Fig. 7. The control signal SC7 illustrates the input signal to the gate of the second p-type MOSFET (T1_2' in Fig. 7) of the third S&SIC circuity (S1' in Fig. 7) of the Mix driver circuit of Fig. 10. The control signal SC8 illustrates the input signal to the gate of the first n-type MOSFET (T2_1' in Fig. 7) of the fourth S&SIC circuity (S2' in Fig. 7) of the Mix driver circuit of Fig. 7. The control signal SC9 illustrates the input signal to the gate of the second n-type MOSFET (T2_2' in Fig. 7) of the fourth S&SIC circuity (S2' in Fig. 7) of the Mix driver circuit of Fig. 7.

At time T1, the first p-type MOSFET (T1_1 in Fig. 7) of the first S&SIC circuity (S1 in Fig. 7) and the second n-type MOSFET (T2_2' in Fig. 7) of the fourth S&SIC circuity (S2' in Fig. 7) are turned off, the second n-type MOSFET (T2_2 in Fig. 7) of the second S&SIC circuity (S2 in Fig. 7) and the first p-type MOSFET (T1_1' in Fig. 7) of the third S&SIC circuity (S1' in Fig. 7) are turned on. The second p-type MOSFET (T1_2 in Fig. 7) of the first S&SIC circuity (S1 in Fig. 7) is turned on at time T2 and turned off at time T4. The second p-type MOSFET (T1_2' in Fig. 7) of the third S&SIC circuity (S1' in Fig. 7) is turned off at time T2 and turned on at time T4. The shared transistor (T3 in Fig. 7) of the Mix driver circuit of Fig. 7 is turned on at time T1 and turned off at time T3.

At time T5, the first p-type MOSFET (T1_1 in Fig. 7) of the first S&SIC circuity (S1 in Fig. 7) and the second n-type MOSFET (T2_2' in Fig. 7) of the fourth S&SIC circuity (S2' in Fig. 7) are turned on, the second n-type MOSFET (T2_2 in Fig. 7) of the second S&SIC circuity (S2 in Fig. 7) and the first p-type MOSFET (T1_1' in Fig. 7) of the third S&SIC circuity (S1' in Fig. 7) are turned off. The first n-type MOSFET (T2_1 in Fig. 7) of the second S&SIC circuity (S2 in Fig. 7) is turned on at time T6 and turned off at time T8. The first n-type MOSFET (T2_1' in Fig. 7) of the fourth S&SIC circuity (S1' in Fig. 7) is turned off at time T6 and turned on at time T8. The shared transistor (T3 in Fig. 7) of the Mix driver circuit of Fig. 10 is turned on at time T5 and turned off at time T7. At time T9, the first p-type MOSFET (T1_1 in Fig. 7) of the first S&SIC circuity (S1 in Fig. 7) and the second n-type MOSFET (T2_2' in Fig. 7) of the fourth S&SIC circuity (S2' in Fig. 7) are turned off, the second n-type MOSFET (T2_2 in Fig. 7) of the second S&SIC circuity (S2 in Fig. 7) and the first p-type MOSFET (T1_1' in Fig. 7) of the third S&SIC circuity (S1' in Fig. 7) are turned on, and the timing diagram is repeated.

The rising time of the voltage waveforms (GDA_near, GDA_far in Fig. 7) of the Mix driver circuit (MV) with Save and Share current (S&SIC) circuits, an additional control circuit and a shared transistor are shorter than the rising time of the Mix driver circuit (MV) of Fig. 2. In other words, the falling time of the voltage waveforms (GDA_near, GDA_far in Fig. 7) of the Mix driver circuit (MV) with Save and Share current (S&SIC) circuits, an additional control circuit and a shared transistor are shorter than the falling time of the Mix driver circuit (MV) of Fig. 2.

### Mix driver circuit (MV) with Save and Share current (S&SIC) circuits, an additional control circuit/clock and additional power supplies

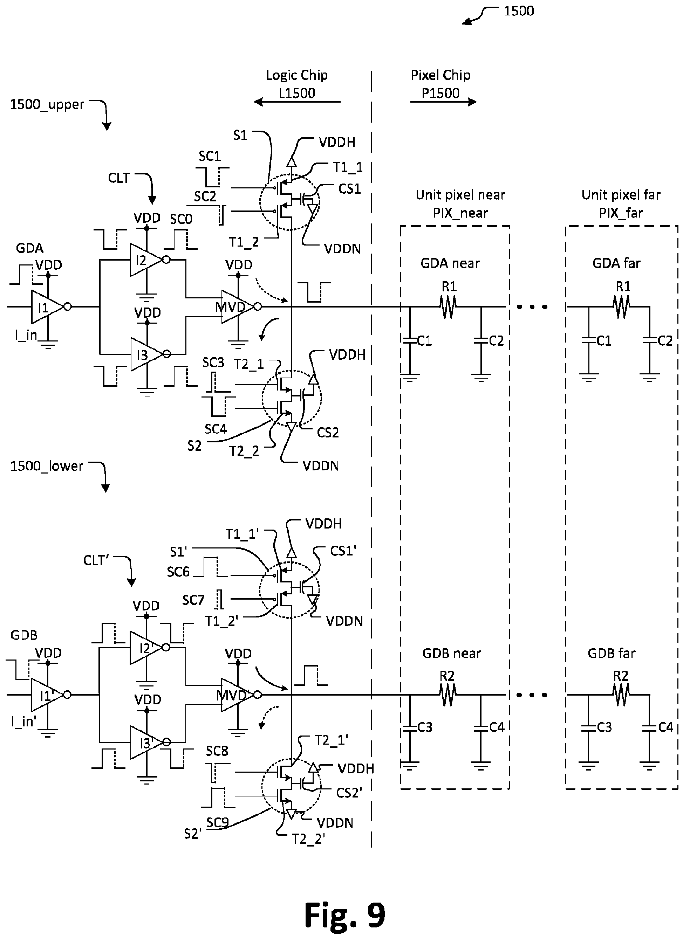

Fig. 9 shows, a fifth embodiment of a circuitry of a Mix driver circuit (MV) of a Time of Flight (ToF) image sensor with S&SIC circuits, an additional control circuit and additional power supplies.

The Mix driver circuit (MV) 1500 comprises a logic chip L1500 and a pixel chip P1500, where the pixel chip P1500 represented in Fig. 9 is modelized by a simplified distributed RC parasitic model. The inputs signals required for the pixel chip P1500 are generated by logic circuits (not shown in Fig. 9) and then distributed by the logic chip L1500 to the pixel chip P1500.

The logic chip L1500 comprises an upper part 1500_upper and a lower part 1500_lower. The upper part 1500_upper of the logic chip L1500 comprises an input I_in where a modulation signal GDA is supplied and a buffer block CLT. The lower part 1500_lower of the logic chip L1500 comprises an input I_in' where a modulation signal GDB is supplied and a buffer block CLT'. The modulation signal GDA is delivered to the pixel chip P1500 via the buffer block CLT and the modulation signal GDB is delivered to the pixel chip P1500 via the buffer block CLT'. The voltages of the modulation signals GDA, GDB periodically change from ground GND to a predetermined voltage (VDD), and the two modulation signals GDA, GDB have a phase shift of 180 degrees. Frequencies used for the modulation signals GDA, GDB may be in the range of tens of MHz to hundreds of MHz. Each of the buffer block CLT, CLT' comprises three inverting buffers I1, I2, I3; I1', I2', I3', a Mix driver MVD; MVD'. Each of the inverting buffers I1, I2, I3; I1', I2', I3' and the Mix driver MVD; MVD' is connected to a ground GND and a power supply VDD, Each of the inverting buffers I1, I2, I3; I1', I2', I3' and the Mix driver MVD; MVD' may be enabled when power is supplied through the power supply VDD. The inverting buffers I2 and I3 (I2' and I3') may have a slight phase difference to avoid through current in the Mix driver MVD (MVD'). The logic chip L1500 further comprises a first Save and Share current (S&SIC) circuity S1, a second Save and Share current (S&SIC) circuity S2, a third Save and Share current (S&SIC) circuity S1', a fourth Save and Share current (S&SIC) circuity S2'. The first S&SIC circuity S1 comprises a first p-type MOSFET T1_1, a second p-type MOSFET T1_2 and a save and share current capacitor (S&SIC) CS1. The source of the first p-type MOSFET T1_1 is connected to a first power supply VDDH, wherein the supply voltage of the first power supply VDDH is preferably 2V, or even higher. The drain of the first p-type MOSFET T1_1 is connected to the source of the second p-type MOSFET T1_2 and the S&SIC CS1, where the S&SIC CS1 is connected to a second power supply VDDN. The supply voltage of the second power supply VDDN is negative, preferably -1.2V. The gate of the first p-type MOSFET T1_1 is connected to an additional control circuit/clock (control signal generator) (not shown in Fig. 9) and receives a first control signal SC1. The additional control circuit/clock is configured to generate control signals to the S&SIC circuits, to adapt the control timing of the transistors in the S&SIC circuits for a better falling/rising time of the Mix driver circuit (MV). The source of the second p-type MOSFET T1_2 is connected to the drain of the first p-type MOSFET T1_1 and the S&SIC CS1. The drain of the second p-type MOSFET T1_2 is connected to the second S&SIC circuity S2, the output of the Mix driver MVD and the pixel chip P1500. The gate of second p-type MOSFET T1_2 is connected to the additional control circuit/clock and receives a second control signal SC2. The second S&SIC circuity S2 comprises a first n-type MOSFET T2_1, a second n-type MOSFET T2_2 and a save and share current capacitor (S&SIC) CS2. The drain of the first n-type MOSFET T2_1 is connected to the drain of the second p-type MOSFET T1_2 of the first S&SIC circuity S1, the output of the Mix driver MVD and the pixel chip P1500. The source of the first n-type MOSFET T2_1 is connected to the drain of the second n-type MOSFET T2_2 and the S&SIC CS2, where the S&SIC CS2 is connected to the first power supply VDDH. The gate of the first n-type MOSFET T2_1 is connected to the additional control circuit/clock and receives a third control signal SC3. The drain of the second n-type MOSFET T2_2 is connected to the source of the first n-type MOSFET T2_1 and the S&SIC CS2. The source of the second n-type MOSFET T2_2 is connected to the second power supply VDDN. The gate of the second n-type MOSFET T2_2 is connected to the additional control circuit/clock and receives a fourth control signal SC4. The duty cycle of the second control signal SC2 is bigger than the duty cycle of the first control signal SC1 and the duty cycle of the third control signal SC3 is smaller than the duty cycle of the fourth control signal SC4. The third S&SIC circuity S1' comprises a first p-type MOSFET T1_1', a second p-type MOSFET T1_2' and a save and share current capacitor (S&SIC) CS1'. The source of the first p-type MOSFET T1_1' is connected to the first power supply VDDH. The drain of the first p-type MOSFET T1_1' is connected to the source of the second p-type MOSFET T1_2' and the S&SIC CS1', where the S&SIC CS1' is connected to the second power supply VDDN. The gate of the first p-type MOSFET T1_1' is connected to an additional control circuit/clock and receives a sixth control signal SC6. The source of the second p-type MOSFET T1_2' is connected to the drain of the first p-type MOSFET T1_1' and the S&SIC CS1'. The drain of the second p-type MOSFET T1_2' is connected to the fourth S&SIC circuity S2', the output of the Mix driver MVD' and the pixel chip P1500. The gate of second p-type MOSFET T1_2' is connected to the additional control circuit and receives a seventh control signal SC7. The fourth S&SIC circuity S2' comprises a first n-type MOSFET T2_1', a second n-type MOSFET T2_2' and a save and share current capacitor (S&SIC) CS2'. The drain of the first n-type MOSFET T2_1' is connected to the drain of the second p-type MOSFET T1_2' of the third S&SIC circuity S1', the output of the Mix driver MVD' and the pixel chip P1500. The source of the first n-type MOSFET T2_1' is connected to the drain of the second n-type MOSFET T2_2' and the S&SIC CS2', where the S&SIC CS2' is connected to the first power supply VDDH. The gate of the first n-type MOSFET T2_1' is connected to the additional control circuit/clock and receives an eighth control signal SC8. The drain of the second n-type MOSFET T2_2' is connected to the source of the first n-type MOSFET T2_1' and the S&SIC CS2'. The source of the second n-type MOSFET T2_2' is connected to the second power supply VDDN. The gate of the second n-type MOSFET T2_2' is connected to the additional control circuit/clock and receives a ninth control signal SC9. The duty cycle of the control signals SC1, SC3, SC7 and SC9 are smaller than the duty cycle of the control signals SC2, SC4, SC6 and SC8. The timing diagram of the respective control signals is provided in more detail in Fig. 10. The difference in the duty cycle of the respective control signals enables that while the charge is saved during a whole half period, the sharing is concentrated during a much shorter time so that the current is transmitted at the charging (or discharging) moment to further improve rising and falling times. With the additional power supplies VDDH, VDDN, the circuit of a Mix driver circuit (MV) with S&SIC circuits, an additional control circuit and additional power supplies is configured to save more charge in the capacitors and share that charge while charging and discharging the pixels. S&SIC CS1, S&SIC CS2, S&SIC CS1' and S&SIC CS2'. In Fig. 9, the buffer blocks CLT and CLT' each comprises three inverting buffers, however, the buffer blocks CLT and CLT' may comprise only two inverting buffers as illustrated in Fig. 3.

The pixel chip P1500 comprises several unit pixels (unit pixel near, ..., unit pixel far). Each of the unit pixels comprises parasitic storage capacitances C1, C2, C3, C4 and parasitic resistors R1, R2. The parasitic storage capacitances C1, C2, C3, C4 build a load capacitance that is charged from GND (ground) to VDD (supply voltage) and discharged from VDD to GND periodically. The parasitic resistors R1, R2 may be placed between parasitic storage capacitances C1, C2, and, respectively, C3, C4. The input of the buffer block CLT is connected to the first input I_in and the output of the buffer block CLT is connected to the upper trace of the unit pixel chip P1500. The input of the buffer block CLT' is connected to the second input I_in' and the output of the buffer block CLT' is connected to the lower trace of the unit pixel chip P1500.

The solid line of the modulation signals GDA, GDB, the control signals and the arrows in Fig. 9 represents a discharging phase of the upper pixel and the charging phase of the lower pixel and the dotted line of the modulation signal GDA, GDB, the control signals and the arrows in Fig. 9 represent a charging phase of the upper pixel and the discharging phase of the lower pixel. The voltage waveform GDA_near (GDB_near) corresponds to the upper load capacitance from the near unit pixel, the unit pixel which the modulation signals GDA (GDB) reaches first. The voltage waveform GDA_far (GDB_far) corresponds to the upper load capacitance from the far unit pixel, the unit pixel which the modulation signals GDA (GDB) reaches last.

The circuitry of a Mix driver circuit (MV) with S&SIC circuits, an additional control circuit and additional power supplies is configured to get better use of the sharing stage. The additional circuit to generate the control signals (pulses) is not shown in Fig. 9, however, any kind of control circuit which is known to the skilled person may be used which is configured to generate a control signal (pulse). Preferably, the control circuit may have a simple structure and has a small power consumption.

Fig. 10 shows, as an example, a timing diagram of the control signals of the circuitry of a Mix driver circuit (MV) with S&SIC circuits, an additional control circuit and additional power supplies.

The control signal SC0 illustrates the input signal to the Mix driver (MVD in Fig. 10) of the Mix driver circuit (MV), which is based on the modulation signal (GDA in Fig. 10). The control signal SC1 illustrates the input signal to the gate of the first p-type MOSFET (T1_1 in Fig. 10) of the first S&SIC circuity (S1 in Fig. 10) of the Mix driver circuit of Fig. 10. The control signal SC2 illustrates the input signal to the gate of the second p-type MOSFET (T1_2 in Fig. 10) of the first S&SIC circuity (S1 in Fig. 10) of the Mix driver circuit of Fig. 10. The control signal SC3 illustrates the input signal to the gate of the first n-type MOSFET (T2_1 in Fig. 10) of the second S&SIC circuity (S2 in Fig. 10) of the Mix driver circuit of Fig. 10. The control signal SC4 illustrates the input signal to the gate of the second n-type MOSFET (T2_2 in Fig. 10) of the second S&SIC circuity (S2 in Fig. 10) of the Mix driver circuit of Fig. 10. The control signal SC6 illustrates the input signal to the gate of the first p-type MOSFET (T1_1' in Fig. 10) of the third S&SIC circuity (S1' in Fig. 10) of the Mix driver circuit of Fig. 10. The control signal SC7 illustrates the input signal to the gate of the second p-type MOSFET (T1_2' in Fig. 10) of the third S&SIC circuity (S1' in Fig. 10) of the Mix driver circuit of Fig. 10. The control signal SC8 illustrates the input signal to the gate of the first n-type MOSFET (T2_1' in Fig. 10) of the fourth S&SIC circuity (S2' in Fig. 10) of the Mix driver circuit of Fig. 10. The control signal SC9 illustrates the input signal to the gate of the second n-type MOSFET (T2_2' in Fig. 10) of the fourth S&SIC circuity (S2' in Fig. 10) of the Mix driver circuit of Fig. 10.

At time T1, the first p-type MOSFET (T1_1 in Fig. 10) of the first S&SIC circuity (S1 in Fig. 10) and the second n-type MOSFET (T2_2' in Fig. 10) of the fourth S&SIC circuity (S2' in Fig. 10) are turned off, the second p-type MOSFET (T2_2 in Fig. 10) of the second S&SIC circuity (S2 in Fig. 10) and the first p-type MOSFET (T1_1' in Fig. 10) of the third S&SIC circuity (S1' in Fig. 10) are turned on. The second p-type MOSFET (T1_2 in Fig. 10) of the first S&SIC circuity (S1 in Fig. 10) is turned on at time T2 and turned off at time T3. The second p-type MOSFET (T1_2' in Fig. 10) of the third S&SIC circuity (S1' in Fig. 10) is turned off at time T2 and turned on at time T3. At time T4, the first p-type MOSFET (T1_1 in Fig. 10) of the first S&SIC circuity (S1 in Fig. 10) and the second n-type MOSFET (T2_2' in Fig. 10) of the fourth S&SIC circuity (S2' in Fig. 10) are tuned on, the second n-type MOSFET (T2_2 in Fig. 10) of the second S&SIC circuity (S2 in Fig. 10) and the first p-type MOSFET (T1_1' in Fig. 10) of the third S&SIC circuity (S1' in Fig. 10) are turned off. The first n-type MOSFET (T2_1' in Fig. 10) of the fourth S&SIC circuity (S1' in Fig. 10) is turned off at time T5 and turned on at time T6. The first n-type MOSFET (T2_1 in Fig. 10) of the second S&SIC circuity (S2 in Fig. 10) is turned on at time T5 and turned off at time T6. At time T7, the first p-type MOSFET (T1_1 in Fig. 10) of the first S&SIC circuity (S1 in Fig. 10) and the second n-type MOSFET (T2_2' in Fig. 7) of the fourth S&SIC circuity (S2' in Fig. 7) are turned off, the second n-type MOSFET (T2_2 in Fig. 10) of the second S&SIC circuity (S2 in Fig. 10) and the first p-type MOSFET (T1_1' in Fig. 7) of the third S&SIC circuity (S1' in Fig. 7) are turned on, and the timing diagram is repeated.

The rising time of the voltage waveforms (GDA_near, GDA_far in Fig. 9) of the Mix driver circuit (MV) with Save and Share current (S&SIC) circuits, an additional control circuit and additional power supplies are shorter than the rising time of the Mix driver circuit (MV) of Fig. 2. In other words, the falling time of the voltage waveforms (GDA_near, GDA_far in Fig. 10) of the Mix driver circuit (MV) with Save and Share current (S&SIC) circuits, an additional control circuit/clock and a shared transistor are shorter than the falling time of the Mix driver circuit (MV) of Fig. 2.

### Mix driver circuit (MV) with Save and Share current (S&SIC) circuits, an additional control circuit/clock, additional power supplies and a shared transistor

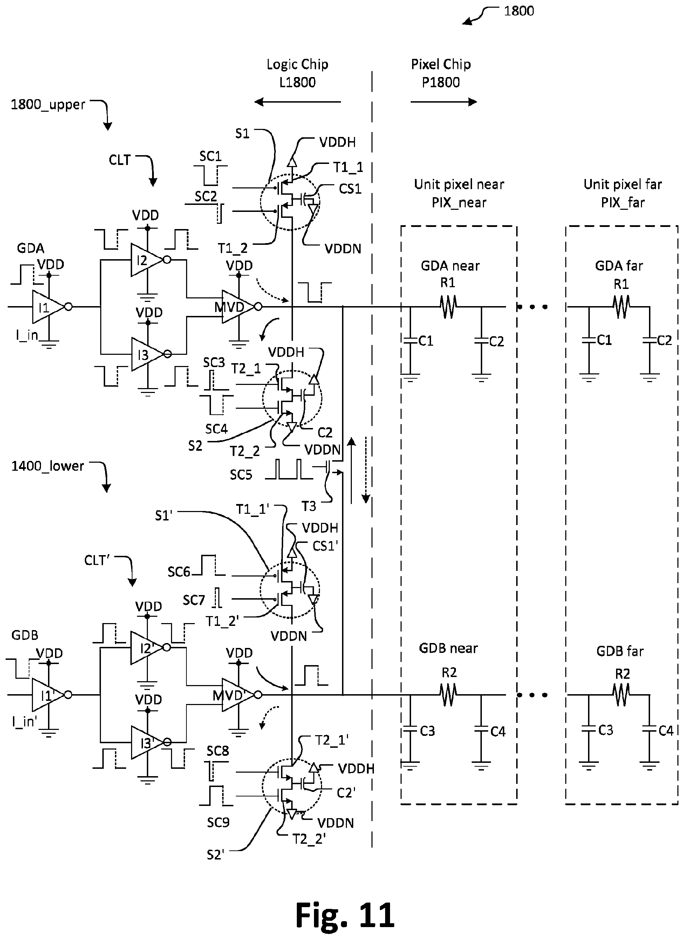

Fig. 11 shows, a sixth embodiment of a circuitry of a Mix driver circuit (MV) of a Time of Flight (ToF) image sensor with S&SIC circuits, an additional control circuit/clock, additional power supplies and a shared transistor.

The Mix driver circuit (MV) 1800 comprises a logic chip L1800 and a pixel chip P1800, where the pixel chip P1800 represented in Fig. 11 is modelized by a simplified distributed RC parasitic model. The inputs signals required for the pixel chip P1800 are generated by logic circuits (not shown in Fig. 11) and then distributed by the logic chip L1800 to the pixel chip P1800.

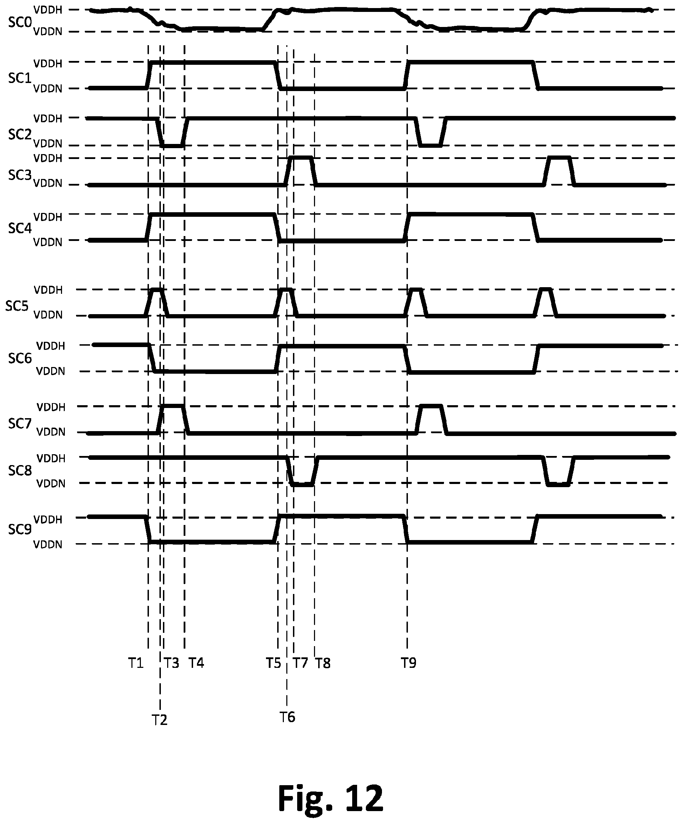

The logic chip L1800 comprises an upper part 1800_upper and a lower part 1800_lower. The upper part 1800_upper of the logic chip L1800 comprises an input I_in where a modulation signal GDA is supplied and a buffer block CLT. The lower part 1800_lower of the logic chip L1800 comprises an input I_in' where a modulation signal GDB is supplied and a buffer block CLT'. The modulation signal GDA is delivered to the pixel chip P1800 via the buffer block CLT and the modulation signal GDB is delivered to the pixel chip P1800 via the buffer block CLT'. The voltages of the modulation signals GDA, GDB periodically change from ground GND to a predetermined voltage, and the two modulation signals GDA, GDB have a phase shift of 180 degrees. Frequencies used for the modulation signals GDA, GDB may be in the range of tens of MHz to hundreds of MHz. Each of the buffer block CLT, CLT' comprises three inverting buffers I1, I2, I3; I1', I2', I3', a Mix driver MVD; MVD'. Each of the inverting buffers I1, I2, I3; I1', I2', I3' and the Mix driver MVD; MVD' is connected to a ground GND and a power supply VDD. Each of the inverting buffers I1, I2, I3; I1', I2', I3' and the Mix driver MVD; MVD' may be enabled when power is supplied through the power supply VDD. The inverting buffers I2 and I3 (I2' and I3') may have a slight phase difference to avoid through current in the Mix driver MVD (MVD'). The logic chip L1800 further comprises a first Save and Share current (S&SIC) circuity S1, a second Save and Share current (S&SIC) circuity S2, a third Save and Share current (S&SIC) circuity S1', a fourth Save and Share current (S&SIC) circuity S2' and a shared transistor (switch) T3. The shared transistor T3 is located before the pixel chip P1800 and after the Save and Share current (S&SIC) circuits, wherein in the shared transistor T3 is configured to transmit the charge of the upper part 1800_upper to the lower part 1800_lower or the charge of the lower part 1800_lower to the upper part 1800_ upper of the logic chip based on a control signal SC5. While the transistor T3 is turned on the charge of a pixel line (upper part or lower part) is transmitted to the opposite line providing it with an extra current to the charging and discharging. The first S&SIC circuity S1 comprises a first p-type MOSFET T1_1, a second p-type MOSFET T1_2 and a save and share current capacitor (S&SIC) CS1. The source of the first p-type MOSFET T1_1 is connected to a first power supply VDDH, wherein the supply voltage of the first power supply VDDH is preferably 2V, or even higher. The drain of the first p-type MOSFET T1_1 is connected to the source of the second p-type MOSFET T1_2 and the S&SIC CS1, where the S&SIC CS1 is connected to a second power supply VDDN. The supply voltage of the second power supply VDDN is negative, preferably -1.2V. The gate of the first p-type MOSFET T1_1 is connected to an additional control circuit (control signal generator) (not shown in Fig. 11) and receives a first control signal SC1. The additional control circuit is configured to generate control signals to the S&SIC circuits, to adapt the control timing of the transistors in the S&SIC circuits for a better falling/rising time of the Mix driver circuit (MV). The source of the second p-type MOSFET T1_2 is connected to the drain of the first p-type MOSFET T1_1 and the S&SIC CS1. The drain of the second p-type MOSFET T1_2 is connected to the second S&SIC circuity S2, the output of the Mix driver MVD and the pixel chip P1800. The gate of second p-type MOSFET T1_2 is connected to the additional control circuit/clock and receives a second control signal SC2. The second S&SIC circuity S2 comprises a first n-type MOSFET T2_1, a second n-type MOSFET T2_2 and a save and share current capacitor (S&SIC) CS2. The drain of the first n-type MOSFET T2_1 is connected to the drain of the second p-type MOSFET T1_2 of the first S&SIC circuity S1, the output of the Mix driver MVD and the pixel chip P1800. The source of the first n-type MOSFET T2_1 is connected to the drain of the second n-type MOSFET T2_2 and the S&SIC CS2, where the S&SIC CS2 is connected to the first power supply VDDH. The gate of the first n-type MOSFET T2_1 is connected to the additional control circuit/clock and receives a third control signal SC3. The drain of the second n-type MOSFET T2_2 is connected to the source of the first n-type MOSFET T2_1 and the S&SIC CS2. The source of the second n-type MOSFET T2_2 is connected to the second power supply VDDN. The gate of the second n-type MOSFET T2_2 is connected to the additional control circuit/clock and receives a fourth control signal SC4. The duty cycle of the second control signal SC2 is bigger than the duty cycle of the first control signal SC1 and the duty cycle of the third control signal SC3 is smaller than the duty cycle of the fourth control signal SC4. The third S&SIC circuity S1' comprises a first p-type MOSFET T1_1', a second p-type MOSFET T1_2' and a save and share current capacitor (S&SIC) CS1'. The source of the first p-type MOSFET T1_1' is connected to the first power supply VDDH. The drain of the first p-type MOSFET T1_1' is connected to the source of the second p-type MOSFET T1_2' and the S&SIC CS1', where the S&SIC CS1' is connected to the second power supply VDDN. The gate of the first p-type MOSFET T1_1' is connected to an additional control circuit and receives a sixth control signal SC6. The source of the second p-type MOSFET T1_2' is connected to the drain of the first p-type MOSFET T1_1' and the S&SIC CS1'. The drain of the second p-type MOSFET T1_2' is connected to the fourth S&SIC circuity S2', the output of the Mix driver MVD' and the pixel chip P1800. The gate of second p-type MOSFET T1_2' is connected to the additional control circuit/clock and receives a seventh control signal SC7. The fourth S&SIC circuity S2' comprises a first n-type MOSFET T2_1', a second n-type MOSFET T2_2' and a save and share current capacitor (S&SIC) CS2'. The drain of the first n-type MOSFET T2_1' is connected to the drain of the second p-type MOSFET T1_2' of the third S&SIC circuity S1', the output of the Mix driver MVD' and the pixel chip P1800. The source of the first n-type MOSFET T2_1' is connected to the drain of the second n-type MOSFET T2_2' and the S&SIC CS2', where the S&SIC CS2' is connected to the first power supply VDDH. The gate of the first n-type MOSFET T2_1' is connected to the additional control circuit/clock and receives an eighth control signal SC8. The drain of the second n-type MOSFET T2_2' is connected to the source of the first n-type MOSFET T2_1' and the S&SIC CS2'. The source of the second n-type MOSFET T2_2' is connected to the second power supply VDDN. The gate of the second n-type MOSFET T2_2' is connected to the additional control circuit/clock and receives a ninth control signal SC9. The duty cycle of the control signals SC1, SC3, SC7 and SC9 are smaller than the duty cycle of the control signals SC2, SC4, SC6 and SC8. The timing diagram of the respective control signals is provided in more detail in Fig. 12. The difference in the duty cycle of the respective control signals enables that while the charge is saved during a whole half period, the sharing is concentrated during a much shorter time so that the current is transmitted at the charging (or discharging) moment to further improve rising and falling times. With the additional power supplies VDDH, VDDN, the circuit of a Mix driver circuit (MV) with S&SIC circuits, an additional control circuit and additional power supplies is configured to save more charge in the capacitors and share that charge while charging and discharging the pixels. S&SIC CS1, S&SIC CS2, S&SIC CS1' and S&SIC CS2' may be a capacitor with comparable capacitance with guiding lines parasitic capacitance, e.g. a 4pF capacitor. In Fig. 16, the buffer blocks CLT and CLT' each comprises three inverting buffers, however, the buffer blocks CLT and CLT' may comprise only two inverting buffers as illustrated in Fig. 3.

The pixel chip P1800 comprises several unit pixels (unit pixel near, ..., unit pixel far). Each of the unit pixels comprises parasitic storage capacitances C1, C2, C3, C4 and parasitic resistors R1, R2. The parasitic storage capacitances C1, C2, C3, C4 build a load capacitance that is charged from GND (ground) to VDD (supply voltage) and discharged from VDD to GND periodically. The parasitic resistors R1, R2 may be placed between the parasitic storage capacitances C1, C2, and, respectively, C3, C4. The input of the buffer block CLT is connected to the first input I_in and the output of the buffer block CLT is connected to the upper trace of the unit pixel chip P1800. The input of the buffer block CLT' is connected to the second input I_in' and the output of the buffer block CLT' is connected to the lower trace of the unit pixel chip P1800.

The solid line of the modulation signals GDA, GDB, the control signals and the arrows in Fig. 11 represents a discharging phase of the upper pixel and the charging phase of the lower pixel and the dotted line of the modulation signal GDA, GDB, the control signals and the arrows in Fig. 11 represent a charging phase of the upper pixel and the discharging phase of the lower pixel. The voltage waveform GDA_near (GDB_near) corresponds to the upper load capacitance from the near unit pixel, the unit pixel which the modulation signals GDA (GDB) reaches first. The voltage waveform GDA_far (GDB_far) corresponds to the upper load capacitance from the far unit pixel, the unit pixel which the modulation signals GDA (GDB) reaches last.

The circuitry of a Mix driver circuit (MV) with S&SIC circuits, an additional control circuit, additional power supplies and shared transistor is configured to get better use of the sharing stage. The additional circuit to generate the control signals (pulses) is not shown in Fig. 11, however, any kind of control circuit which is known to the skilled person may be used which is configured to generate a control signal (pulse). Preferably, the control circuit may have a simple structure and has a small power consumption.

Fig. 12 shows, as an example, a timing diagram of the control signals of the circuitry of a Mix driver circuit (MV) with S&SIC circuits, an additional control circuit, additional power supplies and a shared transistor.

The control signal SC0 illustrates the input signal to the Mix driver (MVD in Fig. 11) of the Mix driver circuit (MV), which is based on the modulation signal (GDA in Fig. 11). The control signal SC1 illustrates the input signal to the gate of the first p-type MOSFET (T1_1 in Fig. 11) of the first S&SIC circuity (S1 in Fig. 11) of the Mix driver circuit of Fig. 11. The control signal SC2 illustrates the input signal to the gate of the second p-type MOSFET (T1_2 in Fig. 11) of the first S&SIC circuity (S1 in Fig. 11) of the Mix driver circuit of Fig. 11. The control signal SC3 illustrates the input signal to the gate of the first n-type MOSFET (T2_1 in Fig. 11) of the second S&SIC circuity (S2 in Fig. 11) of the Mix driver circuit of Fig. 11. The control signal SC4 illustrates the input signal to the gate of the second n-type MOSFET (T2_2 in Fig. 11) of the second S&SIC circuity (S2 in Fig. 11) of the Mix driver circuit of Fig. 11. The control signal SC5 illustrates the input signal to the shared transistor (T3 in Fig. 11) of the Mix driver circuit of Fig. 11. The control signal SC6 illustrates the input signal to the gate of the first p-type MOSFET (T1_1' in Fig. 11) of the third S&SIC circuity (S1' in Fig. 11) of the Mix driver circuit of Fig. 11. The control signal SC7 illustrates the input signal to the gate of the second p-type MOSFET (T1_2' in Fig. 11) of the third S&SIC circuity (S1' in Fig. 11) of the Mix driver circuit of Fig. 11. The control signal SC8 illustrates the input signal to the gate of the first n-type MOSFET (T2_1' in Fig. 11) of the fourth S&SIC circuity (S2' in Fig. 11) of the Mix driver circuit of Fig. 11. The control signal SC9 illustrates the input signal to the gate of the second n-type MOSFET (T2_2' in Fig. 11) of the fourth S&SIC circuity (S2' in Fig. 11) of the Mix driver circuit of Fig. 11.

At time T1, the first p-type MOSFET (T1_1 in Fig. 11) of the first S&SIC circuity (S1 in Fig. 11) and the second n-type MOSFET (T2_2' in Fig. 11) of the fourth S&SIC circuity (S2' in Fig. 11) are turned off, the second n-type MOSFET (T2_2 in Fig. 11) of the second S&SIC circuity (S2 in Fig. 11) and the first p-type MOSFET (T1_1' in Fig. 11) of the third S&SIC circuity (S1' in Fig. 11) are turned on. The second p-type MOSFET (T1_2 in Fig. 11) of the first S&SIC circuity (S1 in Fig. 11) is turned on at time T2 and turned off at time T4. The second p-type MOSFET (T1_2' in Fig. 11) of the third S&SIC circuity (S1' in Fig. 11) is turned off at time T2 and turned on at time T4. The shared transistor (T3 in Fig. 11) of the Mix driver circuit of Fig. 11 is turned on at time T1 and turned off at time T3. At time T5, the first p-type MOSFET (T1_1 in Fig. 11) of the first S&SIC circuity (S1 in Fig. 11) and the second n-type MOSFET (T2_2' in Fig. 11) of the fourth S&SIC circuity (S2' in Fig. 11) are turned on, the second n-type MOSFET (T2_2 in Fig. 11) of the second S&SIC circuity (S2 in Fig. 11) and the first p-type MOSFET (T1_1' in Fig. 11) of the third S&SIC circuity (S1' in Fig. 11) are turned off. The second n-type MOSFET (T2_1 in Fig. 11) of the second S&SIC circuity (S2 in Fig. 11) is turned on at time T6 and turned off at time T8. The first n-type MOSFET (T2_1' in Fig. 11) of the fourth S&SIC circuity (S1' in Fig. 11) is turned off at time T6 and turned on at time T8. The shared transistor (T3 in Fig. 11) of the Mix driver circuit of Fig. 10 is turned on at time T5 and turned off at time T7. At time T9, the first p-type MOSFET (T1_1 in Fig. 11) of the first S&SIC circuity (S1 in Fig. 11) and the second n-type MOSFET (T2_2' in Fig. 11) of the fourth S&SIC circuity (S2' in Fig. 11) is turned off, the second n-type MOSFET (T2_2 in Fig. 11) of the second S&SIC circuity (S2 in Fig. 11) and the first p-type MOSFET (T1_1' in Fig. 11) of the third S&SIC circuity (S1' in Fig. 11) are turned on, and the timing diagram is repeated.

The rising time of the voltage waveforms (GDA_near, GDA_far in Fig. 11) of the Mix driver circuit (MV) with Save and Share current (S&SIC) circuits, an additional control circuit/clock, additional power supplies and a shared transistor are shorter than the rising time of the Mix driver circuit (MV) of Fig. 2. In other words, the falling time of the voltage waveforms (GDA_near, GDA_far in Fig. 11) of the Mix driver circuit (MV) with Save and Share current (S&SIC) circuits, an additional control circuit/clock and a shared transistor are shorter than the falling time of the Mix driver circuit (MV) of Fig. 2.

**Table 1 compares peak to peak current consumption reduction, average power reduction, rising/falling slope improvement, rise/fall times improvement, area impact (the size of the Mix driver circuit (MV)) of the six embodiments with the conventional Mix driver circuit (Fig. 2).**

| Version | Peak to peak current consumption reduction | Average power reduction | Rise/Fall slope improvement | Rise/fall times improvement | Area impact |
|---|---|---|---|---|---|
| Conventional Mix driver circuit | ~ | ~ | ~ | ~ | ~ |
| First embodiment | ✔✔ | ✔ | ✔ | ~ | 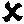 |
| Second embodiment | ✔✔ | ✔ | ✔ | ~ | 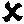 |
| Third embodiment | ✔ | 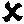 | ✔ | ✔ | 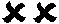 |
| Fourth embodiment | ✔ | ✔✔ | ✔✔ | ✔ | 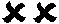 |
| Fifth embodiment | ✔ | 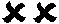 | ✔✔✔ | ✔✔✔ | 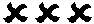 |
| Sixth embodiment | ✔ | 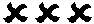 | ✔✔✔ | ✔✔✔ | 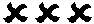 |

The symbol "~" in Table 1 means that the result is the same as the conventional Mix driver circuit (Fig. 2), the symbol "✔" in Table 1 means that the result is better than the conventional mixed driver circuit, and the symbol " 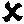 " in Table 1 means that the result is not better than the conventional mixed driver circuit. The number of the symbol "✔" stands for the improvement degree and the number of the symbol " 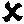 " for the disadvantage degree. In the first embodiment (Fig. 3) and the second embodiment (Fig. 4), the Mix driver circuit requires additional Save and Share current (S&SIC) circuits. Therefore, the sizes of the Mix driver circuit of the first embodiment and the second embodiment are larger than the conventional Mix driver circuit. In the third embodiment (Fig. 5) and the fourth embodiment (Fig. 7), the Mix driver circuit requires additional Save and Share current (S&SIC) circuits and additional control clocks and thus circuits. Therefore, the sizes of the Mix driver circuit of the third embodiment and the fourth embodiment are larger than the conventional Mix driver circuit. In the fifth embodiment (Fig. 9) and the sixth embodiment (Fig. 11), the Mix driver circuit requires additional Save and Share current (S&SIC) circuits, additional control circuits and additional power supplies. Therefore, the sizes of the Mix driver circuit of the fifth embodiment and the sixth embodiment are larger than the conventional Mix driver circuit.

In Table 2, the performances of the second to sixth embodiments (Fig. 4, Fig. 5, Fig 7, Fig. 9 and Fig. 11) and the conventional Mix driver circuit (Fig. 2) are presented. Rise and fall times are measured between 20 and 80 % of the target power supply VDD. Rising and falling slopes are measured between 0.5 to 0.7 V. The powers of the additional control circuits are not included but as mentioned before the impact will be small as it is implemented in logic.

| | Conventional Mix driver circuit | Second embodiment | Third embodiment | Fourth embodiment | Fifth embodiment | Sixth embodiment ( |
|---|---|---|---|---|---|---|
| P2P current VDD (A) | 74 m | 24 m | 48 m | 57m | 48 m | 58 m |
| P2P current GND (A) | 123 m | 53m | 81 m | 71 m | 115 m | 89 m |
| Average current from VDD node (VDD=1.35V) (A) | 605.1m | 600.5m | 615.0m | 588.9m | 471.2m | 414.9m |
| Average current from VDDH node (A) (VDDH=2V) | - | - | - | - | 166.4m | 192.5m |
| Average current from VDDN node (A) (VDDN=-1.2V) | - | - | - | - | 174m | 198.5m |
| Rise time Near (s) | 1.255n | 1.258 n | 1.201n | 1.292n | 469.1p | 717.9p |
| Fall time Near (s) | 960.9p | 899.8 p | 857.4p | 841.6p | 284.3p | 293.4p |
| Rise time far (s) | 1.81n | 1.884 n | 1.737n | 1.775n | 1.663n | 1.526n |
| Fall time far (s) | 1.476n | 1.564 n | 1.419n | 1.404n | 1.403n | 1.445n |
| Rising slope Near (V/s) | 928.1 M | 1.329 G | 2.802 G | 2.212 G | 5.868 G | 5.258 G |
| Falling slope Near (V/s) | 839.2 M | 1.15 G | 2.574 G | 2.021 G | 7.886 G | 7.456 G |
| Rising slope far (V/s) | 555.4 M | 590.9M | 582.1 M | 574.7 M | 847.2 M | 832.4 M |
| Falling slope far (V/s) | 618.5 M | 571.5M | 605.2 M | 580.9 M | 522.6 M | 568.9M |

The embodiments show a Mix Driver circuit with auxiliary capacitances and switches located near the Mix Driver (MVD in Figs 3, 4, 5, 7, 9 and 11). However, other distributed versions of the proposed concept with additional auxiliary bus and timing are also possible.

All units and entities described in this specification and claimed in the appended claims can, if not stated otherwise, be implemented as integrated circuit logic, for example on a chip, and functionality provided by such units and entities can, if not stated otherwise, be implemented by software.

Insofar as the embodiments of the disclosure described above are implemented, at least in part, using software-controlled data processing apparatus, it will be appreciated that a computer program providing such software control and transmission, storage or another medium by which such a computer program is provided are envisaged as aspects of the present disclosure.

## Claims

1. An electronic device comprising circuitry, the circuitry comprising
a mix driver (MVD) for providing a modulation signal (GDA, GDB) to pixels (PIX_near,..., PIX_far) of a time of flight pixel chip (P500; P600; P900; P1200; P1500; P1800), and
at least one Save and Share current circuitry (S1, S1'; S2, S2') connected to the mix driver (MVD), wherein the Save and Share current circuitry is configured to save charge provided by a power supply (VDD) and to transfer the saved charge to the pixels (PIX_near,..., PIX_far) of the time of flight pixel chip (P500; P600; P900; P1200; P1500; P1800); wherein
the Save and Share current circuitry (S1, S1'; S2, S2') comprises
a save and share current storing device (CS1, CS1', CS2, CS2') for saving some charge before it is not needed and sharing it to the pixel chip when it is needed; and
a first p-type MOSFET (T1_l, T1_1') and a second p-type MOSFET (T1_2, T1_2'); or
a first n-type MOSFET (T2_1, T2_1') and a second n-type MOSFET (T2_2, T2_2');
wherein the save and share current storing device (CS1, CS1', CS2, CS2') is a capacitor or a MOSFET acting as a capacitor.

2. The electronic device of claim 1, wherein the at least one Save and Share current circuitry (S1, S1') is configured to save charge provided by a power supply (VDD) in a first phase of a charging phase, and to share the saved charge to the pixel chip (P500; P600; P900; P1200; P1500; P1800) in a second phase of the charging phase.

3. The electronic device of claim 1, wherein the at least one Save and Share current circuitry (S2, S2') is configured to save charge provided by a power supply (GND) in a first phase of a discharging phase, and to share the saved charge to the pixel chip (P500; P600; P900; P1200; P1500; P1800) in a second phase of the discharging phase.

4. The electronic device of claim 1, wherein the at least one Save and Share current circuitry (S1, S1'; S2, S2') comprises a first Save and Share circuitry (S1, S1') and a second Save and Share circuitry (S2, S2'), wherein,
the first Save and Share circuitry (S1, S1') is configured to save charge provided by a power supply (VDD) in a first phase of a charging phase, and to share the saved charge to the pixel chip (P500; P600; P900; P1200; P1500; P1800) in a second phase of the charging phase of the pixel (PIX_near,..., PIX_far), and wherein
the second Save and Share circuitry (S2, S2') is configured to save charge provided by a power supply (GND) in a first phase of a discharging phase, and to share the saved charge to the pixel chip (P500; P600; P900; P1200; P1500; P1800) in a second phase of the discharging phase.

5. The electronic device of claim 2, wherein
the Save and Share current circuitry (S1, S1') comprises the first p-type MOSFET (T1_l, T1_1'), the second p-type MOSFET (T1_2, T1_2') and the save and share current storing device (CS1, CS1'), wherein
in the first phase of the charging phase, the first p-type MOSFET (T1_l, T1_1') is turned on and the second p-type MOSFET (T1_2, T1_2') is turned off, and
in the second phase of the charging phase, the first p-type MOSFET (T1_l, T1_1') is turned off and the second p-type MOSFET (T1_2, T1_2') is turned on.

6. The electronic device of claim 3, wherein
the Save and Share current circuitry (S2, S2') comprises the first n-type MOSFET (T2_l, T2_1'), the second n-type MOSFET (T2_2, T2_2') and the save and share current storing device (CS2, CS2'), wherein
in the first phase of the discharging phase, the first n-type MOSFET (T2_l, T2_1') is turned off and the second n-type MOSFET (T2_2, T2_2') is turned on, and
in the second phase of the discharging phase, the first n-type MOSFET (T2_l, T2_1') is turned on and the second n-type MOSFET (T2_2, T2_2') is turned off.

7. The electronic device of claims 1, wherein the circuitry further comprises a buffer block (CLT500; CLT; CLT'),
wherein the buffer block (CLT500; CLT; CLT') is configured to receive the modulation signal (GDA, GDB) and deliver the modulation signal (GDA, GDB) to the mix driver (MVD), and the mix driver (MVD) is configured to charge or discharge the pixels (PIX_near,..., PIX_far) of the time of flight pixel chip (P500; P600; P900; P1200; P1500; P1800) based on the modulation signal (GDA, GDB).

8. The electronic device of claim 7, wherein
the buffer block (CLT500; CLT; CLT') comprises a first inverting buffer (I501; I1; I1') and a second inverting buffer (I502; I2, I3; I2', I3'), and wherein
the first inverting buffer (I501; I1; I1') is configured to invert the modulation signal (GDA, GDB) and provide the inverted the modulation signal (GDA, GDB) to the second inverting buffer (I502; I2, I3; I2', I3'), and
the second inverting buffer (I502; I2, I3; I2', I3') is configured to invert the inverted the modulation signal (GDA, GDB) and provide the modulation signal (GDA, GDB) to the mix driver (MVD,MVD').

9. The electronic device of claim 8 in combination with claims 4 and 5,
wherein
the source of the first p-type MOSFET (T1_l, T1_1') is connected to the power supply (VDD), the drain of the first p-type MOSFET (T1_l, T1_1') is connected to the source of the second p-type MOSFET (T1_2, T1_2') and the Save and Share current storing device (CS1, CS1'),
the source of second p-type MOSFET (T1_2, T1_2') is connected the drain of the first p-type MOSFET (T1_l, T1_1') and the Save and Share current storing device (CS1, CS1'), the drain of the second p-type MOSFET (T1_2, T1_2') is connected to the second Save and Share current cicruitry (S2, S2') and the pixel chip (P500; P600; P900; P1200; P1500; P1800), and
the gate of the first p-type MOSFET (T1_l, T1_1') is connected to the output of the first inverting buffer (I501; I1; I1') and the gate of the second p-type MOSFET (T1_2, T1_2') is connected to the output of the second inverting buffer (I502; I2; I2').

10. The electronic device of claim 8 in combination with claims 4 and 5,
wherein
the source of the first p-type MOSFET (T1_l, T1_1') is connected to the power supply (VDD), the drain of the first p-type MOSFET (T1_l, T1_1') is connected to the source of the second p-type MOSFET (T1_2, T1_2') and the Save and Share current storing device (CS1, CS1'),
the source of second p-type MOSFET (T1_2, T1_2') is connected the drain of the first p-type MOSFET (T1_l, T1_1') and the Save and Share current storing device (CS1, CS1'), the drain of the second p-type MOSFET (T1_2, T1_2') is connected to the second Save and Share current circuitry (S2, S2') and the pixel chip (P500; P600; P900; P1200; P1500; P1800), and
the gate of the first p-type MOSFET (T1_l, T1_1') is connected to a control circuit and the gate of the second p-type MOSFET (T1_2, T1_2') is connected to the control circuit, wherein
the control circuit is configured to provide a first control signal (SC1; SC6) to the gate of the first p-type MOSFET (T1_l, T1_1') and a second control signal (SC2; SC7) to the gate of the second p-type MOSFET (T1_2, T1_2'), wherein the duty cycle of the first control signal (SC1; SC6) is bigger than the duty cycle of the second control signal (SC2; SC7).

11. The electronic device of claim 8 in combination with claims 4 and 6,
wherein
the drain of the first n-type MOSFET is connected to the first Save and Share current circuitry (S1, S1') and the pixel chip (P500; P600; P900; P1200; P1500; P1800), the source of the first n-type MOSFET (T2_1, T2_1') is connected to the drain of the second n-type MOSFET (T2_2, T2_2') and the Save and Share current storing device (CS2, CS2'),
and the drain of the second n-type MOSFET (T2_2, T2_2') is connected to the source of the first n-type MOSFET (T2_l, T2_1') and the Save and Share current storing device (CS2, CS2'), and the source of the second n-type MOSFET (T2_2, T2_2') is connected to ground, and
the gate of the first n-type MOSFET (T2_l, T2_1') is connected to the output of the second inverting buffer (I502; I2; I2') and the gate of the second n-type MOSFET (T2_2, T2_2') is connected to the output of the first inverting buffer (I501; I1; I1').

12. The electronic device of claim 8 in combination with claims 4 and 6, wherein
The drain of the first n-type MOSFET (T2_l, T2_1') is connected to the first Save and Share current circuitry (S1, S1') and the pixel chip (P500; P600; P900; P1200; P1500; P1800), the source of the first n-type MOSFET (T2_l, T2_1') is connected to the drain of the second n-type MOSFET (T2_2, T2_2') and the Save and Share current storing device (CS2, CS2'),
The drain of the second n-type MOSFET (T2_2, T2_2') is connected to the source of the first n-type MOSFET (T2_l, T2_1') and the Save and Share current storing device (CS2, CS2'), and the source of the second n-type MOSFET (T2_2, T2_2') is connected to ground, and
the gate of the first n-type MOSFET (T2_2, T2_2') is connected to a control circuit and the gate of the second n-type MOSFET (T2_2, T2_2') is connected to the control circuit,
wherein the control circuit is configured to provide a third control signal (SC3; SC8) to the gate of the first n-type MOSFET (T2_l, T2_1') and a fourth control signal (SC4; SC9) to the gate of the second n-type MOSFET (T2_l, T2_1'), wherein the duty cycle of the fourth control signal (SC4; SC9) is bigger than the duty cycle of the third control signal (SC3; SC8).

13. The electronic device of claim 1, wherein
a first power supply (VDDH) and a second power supply (VDDN) is connected to the Save and Share current circuitry (S2, S2'), wherein
the supply voltage of the first power supply (VDDH) is higher than the supply voltage of the power supply (VDD) and the supply voltage of the second power supply (VDDN) has a negative value.

14. An electronic device comprising circuitry (L1200; L1800) wherein the circuitry comprises a first electronic device having first circuitry (1200_upper; 1800 upper) according to claim 1 and a second electronic device having second circuitry (1200_lower; 1800_lower) according to claim 1, wherein
a shared transistor (T3) is placed between the first circuitry (1200_upper; 1800_upper) and the second circuitry (1200_lower; 1800_lower) configured to transmit the charge of the first circuitry (1200_upper; 1800_upper) to the second circuitry (1200_lower; 1800_lower) or the charge of the second circuitry (1200_lower; 1800_lower) to the first circuitry (1200_upper; 1800_upper) of the logic chip based on a control signal (SC5).

15. A method comprising:
providing a modulation signal (GDA, GDB) to pixels (PIX_near,..., PIX_far) of a time of flight pixel chip (P500; P600; P900; P1200; P1500; P1800); and
saving charge provided by a power supply (VDD), by at least one Save and Share current circuitry (S1, S1'; S2, S2') connected to a mix driver (MVD); and
transferring the saved charge to the pixels (PIX_near,..., PIX_far) of the time of flight pixel chip (P500; P600; P900; P1200; P1500; P1800), by the Save and Share current circuitry (S1, S1'; S2, S2') ; wherein
the Save and Share current circuitry (S1, S1'; S2, S2') comprises
a save and share current storing device (CS1, CS1', CS2, CS2') for saving some charge before it is not needed and sharing it to the pixel chip when it is needed; and
a first p-type MOSFET (T1_l, T1_1') and a second p-type MOSFET (T1_2, T1_2'); or
a first n-type MOSFET (T2_1, T2_1') and a second n-type MOSFET (T2_2, T2_2');
wherein the save and share current storing device (CS1, CS1', CS2, CS2') is a capacitor or a MOSFET acting as a capacitor.

## Patentansprüche

1. Elektronische Vorrichtung, die eine Schaltungsanordnung umfasst, wobei die Schaltungsanordnung umfasst
einen Mischtreiber (MVD) zum Bereitstellen eines Modulationssignals (GDA, GDB) für Pixel (PIX_near,..., PIX_far) eines Laufzeitpixelchips (P500; P600; P900; P1200; P1500; P1800) und
mindestens eine Stromspeicher- und -weitergabeschaltungsanordnung (S1, S1'; S2, S2'), die mit dem Mischtreiber (MVD) verbunden ist, wobei die Stromspeicher- und -weitergabeschaltungsanordnung konfiguriert ist, um Ladung zu speichern, die durch eine Stromversorgung (VDD) bereitgestellt wird, und die gespeicherte Ladung zu den Pixeln (PIX_near,..., PIX_far) des Laufzeitpixelchips (P500; P600; P900; P1200; P1500; P1800) zu übertragen; wobei
die Stromspeicher- und -weitergabeschaltungsanordnung (S1, S1'; S2, S2') umfasst
eine Stromspeicher- und -weitergabespeicherungsvorrichtung (CS1, CS1', CS2, CS2') zum Speichern von einem Teil von Ladung, bevor sie nicht benötigt wird, und zu deren Weitergabe an den Pixelchip, wenn sie benötigt wird; und
einen ersten p-MOSFET (T1_1, T1_1') und einen zweiten p-MOSFET (T1_2, T1_2'); oder
einen ersten n-MOSFET (T2_1, T2_1') und einen zweiten n-MOSFET (T2_2, T2_2');
wobei die Stromspeicher- und -weitergabespeicherungsvorrichtung (CS1, CS1', CS2, CS2') ein Kondensator oder ein als Kondensator wirkender MOSFET ist.

2. Elektronische Vorrichtung nach Anspruch 1, wobei die mindestens eine Stromspeicher- und -weitergabeschaltungsanordnung (S1, S1') konfiguriert ist, um Ladung, die durch eine Stromversorgung (VDD) bereitgestellt wird, in einer ersten Phase einer Ladephase zu speichern und die gespeicherte Ladung in einer zweiten Phase der Ladephase an den Pixelchip (P500; P600; P900; P1200; P1500; P1800) weiterzugeben.

3. Elektronische Vorrichtung nach Anspruch 1, wobei die mindestens eine Stromspeicher- und -weitergabeschaltungsanordnung (S2, S2') konfiguriert ist, um Ladung, die durch eine Stromversorgung (GND) bereitgestellt wird, in einer ersten Phase einer Entladephase zu speichern und die gespeicherte Ladung in einer zweiten Phase der Entladephase an den Pixelchip (P500; P600; P900; P1200; P1500; P1800) weiterzugeben.

4. Elektronische Vorrichtung nach Anspruch 1, wobei die mindestens eine Stromspeicher- und -weitergabeschaltungsanordnung (S1, S1'; S2, S2') eine erste Speicher- und Weitergabeschaltungsanordnung (S1, S1') und eine zweite Speicher- und Weitergabeschaltungsanordnung (S2, S2') umfasst, wobei
die erste Speicher- und Weitergabeschaltungsanordnung (S1, S1') konfiguriert ist, um eine durch eine Stromversorgung (VDD) in einer ersten Phase einer Ladephase bereitgestellte Ladung zu speichern und die gespeicherte Ladung in einer zweiten Phase der Ladephase des Pixels (PIX_near,..., PIX_far) an den Pixelchip (P500; P600; P900; P1200; P1500; P1800) weiterzugeben, und wobei
die zweite Speicher- und -Weitergabeschaltungsanordnung (S2, S2') konfiguriert ist, um Ladung, die durch eine Stromversorgung (GND) bereitgestellt wird, in einer ersten Phase einer Entladephase zu speichern und die gespeicherte Ladung in einer zweiten Phase der Entladephase an den Pixelchip (P500; P600; P900; P1200; P1500; P1800) weiterzugeben.

5. Elektronische Vorrichtung nach Anspruch 2, wobei
die Stromspeicher- und -weitergabeschaltungsanordnung (S1, S1') den ersten p-MOSFET (T1_1, T1_1'), den zweiten p-MOSFET (T1_2, T1_2') und die Stromspeicher- und -weitergabespeicherungsvorrichtung (CS1, CS1') umfasst, wobei
in der ersten Phase der Ladephase der erste p-MOSFET (T1_1, T1_1') eingeschaltet ist und der zweite p-MOSFET (T1_2, T1_2') ausgeschaltet ist und
in der zweiten Phase der Ladephase der erste p-MOSFET (T1_1, T1_1') ausgeschaltet ist und der zweite p-MOSFET (T1_2, T1_2') eingeschaltet ist.

6. Elektronische Vorrichtung nach Anspruch 3, wobei
die Stromspeicher- und -weitergabeschaltungsanordnung (S2, S2') den ersten n-MOSFET (T2_1, T2_1'), den zweiten n-MOSFET (T2_2, T2_2') und die Stromspeicher- und -weitergabespeicherungsvorrichtung (CS2, CS2') umfasst, wobei
in der ersten Phase der Entladephase der erste n-MOSFET (T2_1, T2_1') ausgeschaltet ist und der zweite n-MOSFET (T2_2, T2_2') eingeschaltet ist und
in der zweiten Phase der Entladephase der erste n-MOSFET (T2_1, T2_1') eingeschaltet ist und der zweite n-MOSFET (T2_2, T2_2') ausgeschaltet ist.

7. Elektronische Vorrichtung nach Anspruch 1, wobei die Schaltungsanordnung ferner einen Pufferblock (CLT500; CLT; CLT') umfasst,
wobei der Pufferblock (CLT500; CLT; CLT') konfiguriert ist, um das Modulationssignal (GDA, GDB) zu empfangen und das Modulationssignal (GDA, GDB) dem Mischtreiber (MVD) zuzuführen, und der Mischtreiber (MVD) konfiguriert ist, um die Pixel (PIX_near,..., PIX_far) des Laufzeitpixelchips (P500; P600; P900; P1200; P1500; P1800) basierend auf dem Modulationssignal (GDA, GDB) aufzuladen oder zu entladen.

8. Elektronische Vorrichtung nach Anspruch 7, wobei
der Pufferblock (CLT500; CLT; CLT') einen ersten invertierenden Puffer (I501; I1; I1') und einen zweiten invertierenden Puffer (I502; I2, I3; I2', I3') umfasst und wobei
der erste invertierende Puffer (I501; I1; I1') konfiguriert ist, um das Modulationssignal (GDA, GDB) zu invertieren und das invertierte Modulationssignal (GDA, GDB) dem zweiten invertierenden Puffer (I502; I2, I3; I2', I3') bereitzustellen, und
der zweite invertierende Puffer (I502; I2, I3; I2', I3') konfiguriert ist, um das invertierte Modulationssignal (GDA, GDB) zu invertieren und das Modulationssignal (GDA, GDB) dem Mischtreiber (MVD, MVD') bereitzustellen.

9. Elektronische Vorrichtung nach Anspruch 8 in Kombination mit den Ansprüchen 4 und 5, wobei
die Source des ersten p-MOSFETs (T1_1, T1_1') mit der Stromversorgung (VDD) verbunden ist, der Drain des ersten p-MOSFETs (T1_1, T1_1') mit der Source des zweiten p-MOSFETs (T1_2, T1_2') und der Stromspeicher- und - weitergabespeicherungsvorrichtung (CS1, CS1') verbunden ist,
die Source des zweiten p-MOSFETs (T1_2, T1_2') mit dem Drain des ersten p-MOSFETs (T1_1, T1_1') und der Stromspeicher- und - weitergabespeicherungsvorrichtung (CS1, CS1') verbunden ist, der Drain des zweiten p-MOSFETs (T1_2, T1_2') mit der zweiten Stromspeicher- und - weitergabeschaltungsanordnung (S2, S2') und dem Pixelchip (P500; P600; P900; P1200; P1500; P1800) verbunden ist und
das Gate des ersten p-MOSFETs (T1_1, T1_1') mit dem Ausgang des ersten invertierenden Puffers (I501; I1; I1') verbunden ist und das Gate des zweiten p-MOSFETs (T1_2, T1_2') mit dem Ausgang des zweiten invertierenden Puffers (I502; I2; I2') verbunden ist.

10. Elektronische Vorrichtung nach Anspruch 8 in Kombination mit den Ansprüchen 4 und 5, wobei
die Source des ersten p-MOSFETs (T1_1, T1_1') mit der Stromversorgung (VDD) verbunden ist, der Drain des ersten p-MOSFETs (T1_1, T1_1') mit der Source des zweiten p-MOSFETs (T1_2, T1_2') und der Stromspeicher- und - weitergabespeicherungsvorrichtung (CS1, CS1') verbunden ist,
die Source des zweiten p-MOSFETs (T1_2, T1_2') mit dem Drain des ersten p-MOSFETs (T1_1, T1_1') und der Stromspeicher- und - weitergabespeicherungsvorrichtung (CS1, CS1') verbunden ist, der Drain des zweiten p-MOSFETs (T1_2, T1_2') mit der zweiten Stromspeicher- und - weitergabeschaltungsanordnung (S2, S2') und dem Pixelchip (P500; P600; P900; P1200; P1500; P1800) verbunden ist und
das Gate des ersten p-MOSFETs (T1_1, T1_1') mit einer Steuerschaltung verbunden ist und das Gate des zweiten p-MOSFETs (T1_2, T1_2') mit der Steuerschaltung verbunden ist, wobei
die Steuerschaltung konfiguriert ist, um dem Gate des ersten p-MOSFETs (T1_1, T1_1') ein erstes Steuersignal (SC1; SC6) bereitzustellen und dem Gate des zweiten p-MOSFETs (T1_2, T1_2') ein zweites Steuersignal (SC2; SC7) bereitzustellen, wobei die Einschaltdauer des ersten Steuersignals (SC1; SC6) größer als die Einschaltdauer des zweiten Steuersignals (SC2; SC7) ist.

11. Elektronische Vorrichtung nach Anspruch 8 in Kombination mit den Ansprüchen 4 und 6, wobei
der Drain des ersten n-MOSFETs mit der ersten Stromspeicher- und - weitergabeschaltungsanordnung (S1, S1') und dem Pixelchip (P500; P600; P900; P1200; P1500; P1800) verbunden ist, die Source des ersten n-MOSFETs (T2_1, T2_1') mit dem Drain des zweiten n-MOSFETs (T2_2, T2_2') und der Stromspeicher- und -weitergabespeicherungsvorrichtung (CS2, CS2') verbunden ist,
und der Drain des zweiten n-MOSFETs (T2_2, T2_2') mit der Source des ersten n-MOSFETs (T2_1, T2_1') und der Stromspeicher- und - weitergabespeicherungsvorrichtung (CS2, CS2') verbunden ist und die Source des zweiten n-MOSFETs (T2_2, T2_2') mit Masse verbunden ist und
das Gate des ersten n-MOSFETs (T2_1, T2_1') mit dem Ausgang des zweiten invertierenden Puffers (I502; I2; I2') verbunden ist und das Gate des zweiten n-MOSFETs (T2_2, T2_2') mit dem Ausgang des ersten invertierenden Puffers (I501; I1; I1') verbunden ist.

12. Elektronische Vorrichtung nach Anspruch 8 in Kombination mit den Ansprüchen 4 und 6, wobei
der Drain des ersten n-MOSFETs (T2_1, T2_1') mit der ersten Stromspeicher- und -weitergabeschaltungsanordnung (S1, S1') und dem Pixelchip (P500; P600; P900; P1200; P1500; P1800) verbunden ist, die Source des ersten n-MOSFETs (T2_1, T2_1') mit dem Drain des zweiten n-MOSFETs (T2_2, T2_2') und der Stromspeicher- und -weitergabespeicherungsvorrichtung (CS2, CS2') verbunden ist,
der Drain des zweiten n-MOSFETs (T2_2, T2_2') mit der Source des ersten n-MOSFETs (T2_1, T2_1') und der Stromspeicher- und - weitergabespeicherungsvorrichtung (CS2, CS2') verbunden ist und die Source des zweiten n-MOSFETs (T2_2, T2_2') mit Masse verbunden ist und
das Gate des ersten n-MOSFETs (T2_2, T2_2') mit einer Steuerschaltung verbunden ist und das Gate des zweiten n-MOSFETs (T2_2, T2_2') mit der Steuerschaltung verbunden ist,
wobei die Steuerschaltung konfiguriert ist, um dem Gate des ersten n-MOSFETs (T2_1, T2_1') ein drittes Steuersignal (SC3; SC8) bereitzustellen und dem Gate des zweiten n-MOSFETs (T2_1, T2_1') ein viertes Steuersignal (SC4; SC9) bereitzustellen, wobei die Einschaltdauer des vierten Steuersignals (SC4; SC9) größer als die Einschaltdauer des dritten Steuersignals (SC3; SC8) ist.

13. Elektronische Vorrichtung nach Anspruch 1, wobei
eine erste Stromversorgung (VDDH) und eine zweite Stromversorgung (VDDN) mit der Stromspeicher- und -weitergabeschaltungsanordnung (S2, S2') verbunden sind, wobei
die Versorgungsspannung der ersten Stromversorgung (VDDH) höher als die Versorgungsspannung der Stromversorgung (VDD) ist und die Versorgungsspannung der zweiten Stromversorgung (VDDN) einen negativen Wert aufweist.

14. Elektronische Vorrichtung, umfassend
eine Schaltungsanordnung (L1200; L1800), wobei die Schaltungsanordnung eine erste elektronische Vorrichtung, die eine erste Schaltungsanordnung (1200_upper; 1800_upper) nach Anspruch 1 aufweist, und eine zweite elektronische Vorrichtung umfasst, die eine zweite Schaltungsanordnung (1200_lower; 1800_lower) nach Anspruch 1 aufweist, wobei
ein gemeinsam genutzter Transistor (T3) zwischen der ersten Schaltungsanordnung (1200_upper; 1800_upper) und der zweiten Schaltungsanordnung (1200_lower; 1800_lower) angeordnet und konfiguriert ist, um basierend auf einem Steuersignal (SC5) die Ladung der ersten Schaltungsanordnung (1200_upper; 1800_upper) zu der zweiten Schaltungsanordnung (1200_lower; 1800_lower) oder die Ladung der zweiten Schaltungsanordnung (1200_lower; 1800_lower) zu der ersten Schaltungsanordnung (1200_upper; 1800_upper) des Logikchips zu übertragen.

15. Verfahren, umfassend:
Bereitstellen eines Modulationssignals (GDA, GDB) für Pixel (PIX_near,..., PIX_far) eines Laufzeitpixelchips (P500; P600; P900; P1200; P1500; P1800); und
Speichern von Ladung, die durch eine Stromversorgung (VDD) bereitgestellt wird, durch mindestens eine Stromspeicher- und -weitergabeschaltungsanordnung (S1, S1'; S2, S2'), die mit einem Mischtreiber (MVD) verbunden ist; und
Übertragen der gespeicherten Ladung zu den Pixeln (PIX_near,..., PIX_far) des Laufzeitpixelchips (P500; P600; P900; P1200; P1500; P1800), durch die Stromspeicher- und -weitergabeschaltungsanordnung (S1, S1'; S2, S2'); wobei
die Stromspeicher- und -weitergabeschaltungsanordnung (S1, S1'; S2, S2') umfasst
eine Stromspeicher- und -weitergabespeicherungsvorrichtung (CS1, CS1', CS2, CS2') zum Speichern eines Teils von Ladung, bevor sie nicht benötigt wird, und zu deren Weitergabe an den Pixelchip, wenn sie benötigt wird; und
einen ersten p-MOSFET (T1_1, T1_1') und einen zweiten p-MOSFET (T1_2, T1_2'); oder
einen ersten n-MOSFET (T2_1, T2_1') und einen zweiten n-MOSFET (T2_2, T2_2');
wobei die Stromspeicher- und -weitergabespeicherungsvorrichtung (CS1, CS1', CS2, CS2') ein Kondensator oder ein als Kondensator wirkender MOSFET ist.

## Revendications

1. Dispositif électronique comprenant un ensemble de circuits, l'ensemble de circuits comprenant
un circuit d'attaque de mélange (MVD) permettant de fournir un signal de modulation (GDA, GDB) à des pixels (PIX_near,..., PIX_far) d'une puce de pixels à temps de vol (P500 ; P600 ; P900 ; P1200 ; P1500 ; P1800), et
au moins un ensemble de circuits d'enregistrement et de partage de courant (S1, S1' ; S2, S2') connecté au circuit d'attaque de mélange (MVD), dans lequel l'ensemble de circuits d'enregistrement et de partage de courant est configuré pour enregistrer la charge fournie par une alimentation électrique (VDD) et pour transférer la charge enregistrée aux pixels (PIX_near,..., PIX_far) de la puce de pixels à temps de vol (P500 ; P600 ; P900 ; P1200 ; P1500 ; P1800) ; dans lequel
l'ensemble de circuits d'enregistrement et de partage de courant (S1, S1' ; S2, S2') comprend
un dispositif de stockage de courant d'enregistrement et de partage (CS1, CS1', CS2, CS2') permettant d'enregistrer une certaine charge avant qu'elle ne soit plus nécessaire et de la partager avec la puce de pixels quand elle est nécessaire ; et
un premier MOSFET de type p (T1_1, T1_1') et un second MOSFET de type p (T1_2, T1_2') ; ou
un premier MOSFET de type n (T2_1, T2_1') et un second MOSFET de type n (T2_2, T2_2') ;
dans lequel le dispositif de stockage de courant d'enregistrement et de partage (CS1, CS1', CS2, CS2') est un condensateur ou un MOSFET agissant comme un condensateur.

2. Dispositif électronique selon la revendication 1, dans lequel l'au moins un ensemble de circuits d'enregistrement et de partage de courant (S1, S1') est configuré pour enregistrer la charge fournie par une alimentation électrique (VDD) dans une première phase d'une phase de charge, et pour partager la charge enregistrée avec la puce de pixels (P500 ; P600 ; P900 ; P1200 ; P1500 ; P1800) dans une seconde phase de la phase de charge.

3. Dispositif électronique selon la revendication 1, dans lequel l'au moins un ensemble de circuits d'enregistrement et de partage de courant (S2, S2') est configuré pour enregistrer la charge fournie par une alimentation électrique (GND) dans une première phase d'une phase de décharge, et pour partager la charge enregistrée avec la puce de pixels (P500 ; P600 ; P900 ; P1200 ; P1500 ; P1800) dans une seconde phase de la phase de décharge.

4. Dispositif électronique selon la revendication 1, dans lequel l'au moins un ensemble de circuits d'enregistrement et de partage de courant (S1, S1' ; S2, S2') comprend un premier ensemble de circuits d'enregistrement et de partage (S1, S1') et un second ensemble de circuits d'enregistrement et de partage (S2, S2'), dans lequel,
le premier ensemble de circuits d'enregistrement et de partage (S1, S1') est configuré pour enregistrer la charge fournie par une alimentation électrique (VDD) dans une première phase d'une phase de charge, et pour partager la charge enregistrée avec la puce de pixels (P500 ; P600 ; P900 ; P1200 ; P1500 ; P1800) dans une seconde phase de la phase de charge du pixel (PIX_near,..., PIX_far), et dans lequel
le second ensemble de circuits d'enregistrement et de partage (S2, S2') est configuré pour enregistrer la charge fournie par une alimentation électrique (GND) dans une première phase d'une phase de décharge, et pour partager la charge enregistrée avec la puce de pixels (P500 ; P600 ; P900 ; P1200 ; P1500 ; P1800) dans une seconde phase de la phase de décharge.

5. Dispositif électronique selon la revendication 2, dans lequel
l'ensemble de circuits d'enregistrement et de partage de courant (S1, S1') comprend le premier MOSFET de type p (T1_1, T1_1'), le second MOSFET de type p (T1_2, T1_2') et le dispositif de stockage de courant d'enregistrement et de partage (CS1, CS1'), dans lequel
dans la première phase de la phase de charge, le premier MOSFET de type p (T1_1, T1_1') est activé et le second MOSFET de type p (T1_2, T1_2') est désactivé, et
dans la seconde phase de la phase de charge, le premier MOSFET de type p (T1_1, T1_1') est désactivé et le second MOSFET de type p (T1_2, T1_2') est activé.

6. Dispositif électronique selon la revendication 3, dans lequel
l'ensemble de circuits d'enregistrement et de partage de courant (S2, S2') comprend le premier MOSFET de type n (T2_1, T2_1'), le second MOSFET de type n (T2_2, T2_2') et le dispositif de stockage de courant d'enregistrement et de partage (CS2, CS2'), dans lequel
dans la première phase de la phase de décharge, le premier MOSFET de type N (T2_1, T2_1') est désactivé et le second MOSFET de type N (T2_2, T2_2') est activé, et
dans la seconde phase de la phase de décharge, le premier MOSFET de type N (T2_1, T2_1') est activé et le second MOSFET de type N (T2_2, T2_2') est désactivé.

7. Dispositif électronique selon la revendication 1, dans lequel l'ensemble de circuits comprend en outre un bloc tampon (CLT500 ; CLT ; CLT'),
dans lequel le bloc tampon (CLT500 ; CLT ; CLT') est configuré pour recevoir le signal de modulation (GDA, GDB) et délivrer le signal de modulation (GDA, GDB) au circuit d'attaque de mélange (MVD), et le circuit d'attaque de mélange (MVD) est configuré pour charger ou décharger les pixels (PIX_near,..., PIX_far) de la puce de pixels à temps de vol (P500 ; P600 ; P900 ; P1200 ; P1500 ; P1800) sur la base du signal de modulation (GDA, GDB).

8. Dispositif électronique selon la revendication 7, dans lequel
le bloc tampon (CLT500 ; CLT ; CLT') comprend un premier tampon inverseur (I501 ; I1 ; I1') et un second tampon inverseur (I502 ; I2, I3 ; I2', I3'), et dans lequel
le premier tampon inverseur (I501 ; I1 ; I1') est configuré pour inverser le signal de modulation (GDA, GDB) et fournir le signal de modulation inversé (GDA, GDB) au second tampon inverseur (I502 ; I2, I3 ; I2', I3'), et
le second tampon inverseur (I502 ; I2, I3 ; I2', I3') est configuré pour inverser le signal de modulation (GDA, GDB) inversé et fournir le signal de modulation (GDA, GDB) au circuit d'attaque de mélange (MVD, MVD').

9. Dispositif électronique selon la revendication 8 en combinaison avec les revendications 4 et 5, dans lequel
la source du premier MOSFET de type p (T1_1, T1_1') est connectée à l'alimentation électrique (VDD), le drain du premier MOSFET de type p (T1_1, T1_1') est connecté à la source du second MOSFET de type p (T1_2, T1_2') et le dispositif de stockage de courant d'enregistrement et de partage (CS1, CS1'),
la source du second MOSFET de type p (T1_2, T1_2') est connectée au drain du premier MOSFET de type p (T1_1, T1_1') et au dispositif de stockage de courant d'enregistrement et de partage (CS1, CS1'), le drain du second MOSFET de type p (T1_2, T1_2') est connecté au second ensemble de circuits d'enregistrement et de partage de courant (S2, S2') et à la puce de pixels (P500 ; P600 ; P900 ; P1200 ; P1500 ; P1800), et
la grille du premier MOSFET de type p (T1_1, T1_1') est connectée à la sortie du premier tampon inverseur (I501 ; I1 ; I1') et la grille du second MOSFET de type p (T1_2, T1_2') est connectée à la sortie du second tampon inverseur (I502 ; I2 ; I2').

10. Dispositif électronique selon la revendication 8 en combinaison avec les revendications 4 et 5, dans lequel
la source du premier MOSFET de type p (T1_1, T1_1') est connectée à l'alimentation électrique (VDD), le drain du premier MOSFET de type p (T1_1, T1_1') est connecté à la source du second MOSFET de type p (T1_2, T1_2') et le dispositif de stockage de courant d'enregistrement et de partage (CS1, CS1'),
la source du second MOSFET de type p (T1_2, T1_2') est connectée au drain du premier MOSFET de type p (T1_1, T1_1') et au dispositif de stockage d'enregistrement et de partage de courant (CS1, CS1'), le drain du second MOSFET de type p (T1_2, T1_2') est connecté au second ensemble de circuits d'enregistrement et de partage de courant (S2, S2') et à la puce de pixels (P500 ; P600 ; P900 ; P1200 ; P1500 ; P1800), et
la grille du premier MOSFET de type p (T1_1, T1_1') est connectée à un circuit de commande et la grille du second MOSFET de type p (T1_2, T1_2') est connectée au circuit de commande, dans lequel
le circuit de commande est configuré pour fournir un premier signal de commande (SC1 ; SC6) à la grille du premier MOSFET de type p (T1_1, T1_1') et un deuxième signal de commande (SC2 ; SC7) à la grille du second MOSFET de type p (T1_2, T1_2'), dans lequel le cycle de service du premier signal de commande (SC1 ; SC6) est supérieur au cycle au service du deuxième signal de commande (SC2 ; SC7).

11. Dispositif électronique selon la revendication 8 en combinaison avec les revendications 4 et 6, dans lequel
le drain du premier MOSFET de type n est connecté au premier ensemble de circuits d'enregistrement et de partage de courant (S1, S1') et à la puce de pixels (P500 ; P600 ; P900 ; P1200 ; P1500 ; P1800), la source du premier MOSFET de type n (T2_1, T2_1') est connectée au drain du second MOSFET de type n (T2_2, T2_2') et au dispositif de stockage de courant d'enregistrement et de partage (CS2, CS2'),
et le drain du second MOSFET de type n (T2_2, T2_2') est connecté à la source du premier MOSFET de type n (T2_1, T2_1') et au dispositif de stockage de courant d'enregistrement et de partage (CS2, CS2'), et la source du second MOSFET de type n (T2_2, T2_2') est connectée à la masse, et
la grille du premier MOSFET de type n (T2_1, T2_1') est connectée à la sortie du second tampon inverseur (I502 ; I2 ; I2') et la grille du second MOSFET de type n (T2_2, T2_2') est connectée à la sortie du premier tampon inverseur (I501 ; I1 ; I1').

12. Dispositif électronique selon la revendication 8 en combinaison avec les revendications 4 et 6, dans lequel
le drain du premier MOSFET de type n (T2_1, T2_1') est connecté au premier ensemble de circuits d'enregistrement et de partage de courant (S1, S1') et la puce de pixels (P500 ; P600 ; P900 ; P1200 ; P1500 ; P1800), la source du premier MOSFET de type n (T2_1, T2_1') est connectée au drain du second MOSFET de type n (T2_2, T2_2') et au dispositif de stockage de courant d'enregistrement et de partage (CS2, CS2'),
le drain du second MOSFET de type n (T2_2, T2_2') est connecté à la source du premier MOSFET de type n (T2_1, T2_1') et au dispositif de stockage de courant d'enregistrement et de partage (CS2, CS2'), et la source du second MOSFET de type n (T2_2, T2_2') est connectée à la masse, et
la grille du premier MOSFET de type N (T2_2, T2_2') est connectée à un circuit de commande et la grille du second MOSFET de type N (T2_2, T2_2') est connectée au circuit de commande,
dans lequel le circuit de commande est configuré pour fournir un troisième signal de commande (SC3 ; SC8) à la grille du premier MOSFET de type n (T2_1, T2_1') et un quatrième signal de commande (SC4 ; SC9) à la grille du second MOSFET de type n (T2_1, T2_1'), dans lequel le cycle de service du quatrième signal de commande (SC4 ; SC9) est supérieur au cycle de service du troisième signal de commande (SC3 ; SC8).

13. Dispositif électronique selon la revendication 1, dans lequel
une première alimentation électrique (VDDH) et une seconde alimentation électrique (VDDN) sont connectées au circuit d'enregistrement et de partage de courant (S2, S2'), dans lequel
la tension d'alimentation de la première alimentation électrique (VDDH) est supérieure à la tension d'alimentation de l'alimentation électrique (VDD) et la tension d'alimentation de la seconde alimentation électrique (VDDN) présente une valeur négative.

14. Dispositif électronique comprenant
l'ensemble de circuits (L1200 ; L1800), dans lequel l'ensemble de circuits comprend un premier dispositif électronique présentant un premier ensemble de circuits (1200_upper ; 1800_upper) selon la revendication 1 et un second dispositif électronique présentant un ensemble second de circuits (1200_lower ; 1800_lower) selon la revendication 1, dans lequel
un transistor partagé (T3) est placé entre le premier ensemble de circuits (1200_upper ; 1800_upper) et le second ensemble de circuits (1200_lower ; 1800_lower) configuré pour transmettre la charge du premier ensemble de circuits (1200_upper ; 1800_upper) au second ensemble de circuits (1200_lower ; 1800_lower) ou la charge du second ensemble de circuits (1200_lower ; 1800_lower) au premier ensemble de circuits (1200_upper ; 1800_upper) de la puce logique sur la base d'un signal de commande (SC5).

15. Procédé comprenant :
la fourniture d'un signal de modulation (GDA, GDB) à des pixels (PIX_near,..., PIX_far) d'une puce de pixels à temps de vol (P500 ; P600 ; P900 ; P1200 ; P1500 ; P1800) ; et
l'enregistrement de la charge fournie par une alimentation électrique (VDD), par au moins un ensemble de circuits d'enregistrement et de partage de courant (S1, S1' ; S2, S2') connecté à un circuit d'attaque de mélange (MVD) ; et
le transfert de la charge enregistrée au pixels (PIX_near,..., PIX_far) de la puce de pixels à temps de vol (P500 ; P600 ; P900 ; P1200 ; P1500 ; P1800), par l'ensemble de circuits d'enregistrement et de partage de courant (S1, S1' ; S2, S2') ; dans lequel
l'ensemble de circuits d'enregistrement et de partage de courant (S1, S1' ; S2, S2') comprend
un dispositif de stockage de courant d'enregistrement et de partage (CS1, CS1', CS2, CS2') permettant d'enregistrer une certaine charge avant qu'elle ne soit plus nécessaire et de la partager avec la puce de pixels quand elle est nécessaire ; et
un premier MOSFET de type p (T1_1, T1_1') et un second MOSFET de type p (T1_2, T1_2') ; ou
un premier MOSFET de type n (T2_1, T2_1') et un second MOSFET de type n (T2_2, T2_2') ;
dans lequel le dispositif de stockage de courant d'enregistrement et de partage (CS1, CS1', CS2, CS2') est un condensateur ou un MOSFET agissant comme un condensateur.
